(19) 

Europäisches
Patentamt
European
Patent Office
Office européen
des brevets

(11) **EP 4 601 298 A1**

(12) **EUROPEAN PATENT APPLICATION**

(43) Date of publication:
**13.08.2025 Bulletin 2025/33**

(21) Application number: **24217423.3**

(22) Date of filing: **04.12.2024**

(51) International Patent Classification (IPC):
**H04N 21/234** (2011.01)  **H04N 19/136** (2014.01)
**H04N 19/147** (2014.01)  **H04N 19/196** (2014.01)
**H04N 21/2343** (2011.01)  **H04N 21/845** (2011.01)

(52) Cooperative Patent Classification (CPC):
**H04N 21/8456; H04N 19/136; H04N 19/147;
H04N 19/196; H04N 21/23418; H04N 21/23439**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **07.02.2024 US 202418435842**

(71) Applicants:
• **Disney Enterprises, Inc.
Burbank, CA 91521 (US)**
• **Beijing YoJaJa Software
Technology Development Co., Ltd.
Beijing 100015 (CN)**

(72) Inventors:
• **LIU, Chen
Beijing, 100102 (CN)**
• **ZHANG, Wenhao
Beijing, 100102 (CN)**
• **XUE, Yuanyi
Burbank, CA 91521 (US)**
• **HUANGFU, Xuchang
Beijing, 100102 (CN)**

(74) Representative: **Müller-Boré & Partner
Patentanwälte PartG mbB
Friedenheimer Brücke 21
80639 München (DE)**

(54) **ENCODING OPERATIONAL POINTS SELECTION FOR VIDEO ENCODING**

(57) In some embodiments, a method receives a plurality of representations of a relationship between bitrate and quality for a first portion of content. Representations in the plurality of representations are based on respective second portions of the content that is included in the first portion of the video. Clusters of the plurality of representations are generated and the clusters are analyzed to determine a first list of encoding operational points for respective clusters. The method analyzes the first list of encoding operational points for respective cluster to determine a second list of encoding operational points. The second list of encoding operational points is output for use in encoding the first portion of content.

FIG. 1

**Description**

## CROSS REFERENCE TO RELATED APPLICATIONS

This application is related to U.S. App. No. 18/179,281, filed March 6, 2023, entitled "DYNAMIC SELECTION OF CANDIDATE BITRATES FOR VIDEO ENCODING" and U.S. App. No. 18/295,184, filed April 3, 2023, entitled "PREDICTION OF RATE DISTORTION CURVES FOR VIDEO ENCODING", the content of all of which is incorporated herein by reference in its entirety for all purposes.

## BACKGROUND

One method of delivering videos to client devices uses Adaptive Bitrate Streaming (ABR). Adaptive bitrate streaming is predicated on providing multiple streams (often referred to as variants or profiles) that are encoded at different levels of video attributes, such as different levels of bitrate and/or quality. A profile ladder lists different profiles that are available for a client to use when streaming segments of a video. Clients can dynamically select profiles based on network conditions and other factors. The video is segmented (e.g., split into discrete segments, usually a few seconds long each), and clients can switch from one profile to another at segment boundaries as network conditions change. For example, a video delivery system would like to provide clients with a profile that has a higher bitrate when network conditions with higher available bandwidth are being experienced, which improves the quality of the video being streamed. When network conditions with lower available bandwidth are being experienced, the video delivery system would like to provide clients with a profile with a lower bitrate such that the clients can play the video without any playback issues, such as rebuffering or downloading failures.

Encoding operational points may be a list of important encoding bitrates that could be used in the encoding process to encode segments of the video. The encoding operational points are set with default values for multiple videos. However, videos may have different content with diverse characteristics. Further, a single video may include segments or shots that have diverse characteristics. Thus, it may be suboptimal to apply default or universal encoding operational points with content that has diverse characteristics across videos, or even within the same video.

## BRIEF DESCRIPTION OF THE DRAWINGS

The included drawings are for illustrative purposes and serve only to provide examples of possible structures and operations for the disclosed inventive systems, apparatus, methods and computer program products. These drawings in no way limit any changes in form and detail that may be made by one skilled in the art without departing from the spirit and scope of the disclosed implementations.

FIG. 1 depicts a system for dynamically selecting a list of encoding operational points according to some embodiments.

FIG. 2 shows an example of portions of a video according to some embodiments.

FIG. 3A depicts an example of the generation of lists of encoding operational points according to some embodiments.

FIG. 3B depicts an example of the generation of encoded segments according to some embodiments.

FIG. 4 depicts an example of clustering encoded segments into multiple pools according to some embodiments.

FIG. 5 depicts an example of the selection process according to some embodiments.

FIG. 6 depicts an example of a graph of a rate distortion curve that may be used to select encoded segments for pools according to some embodiments.

FIG. 7 depicts an example of the selected encoded segments for profiles for each segment according to some embodiments.

FIG. 8 depicts an example of different rate distortion curves for video content according to some embodiments.

FIG. 9 shows different characteristics using different encoding configurations according to some embodiments.

FIG. 10 depicts an example of using static encoding operational points for different rate distortion curves according to some embodiments.

FIG. 11 depicts an optimized list of encoding operational points according to some embodiments.

FIG. 12 depicts a more detailed example of an encoding system and pre-analysis optimization process according to some embodiments.

FIG. 13 depicts a more detailed example of a RD prediction system according to some embodiments.

FIG. 14 depicts the output of prediction network according to some embodiments.

FIG. 15 depicts a simplified flowchart of a method for selecting encoding operational points according to some embodiments.

FIG. 16 depicts a simplified flowchart for selecting a representative curve according to some embodiments.

FIG. 17A depicts an example of RD curves for segments of a chunk according to some embodiments.

FIG. 17B depicts a graph for selecting a representative RD curve for respective clusters according to some embodiments.

FIG. 18 depicts a simplified flowchart of a local optimization process to select an optimal range according to some embodiments.

FIG. 19A depicts a graph showing a knee point according to some embodiments.

FIG. 19B shows an example of a floor point, a knee point, and a ceiling point according to some embodiments.

FIG. 20 depicts a graph that shows an example of selecting local optimal encoding operational points according to some embodiments.

FIG. 21 depicts a graph depicting selecting local optimal encoding operational points based on constraint conditions according to some embodiments.

FIG. 22 depicts different examples of local optimal encoding operational points of the representative RD curves according to some embodiments.

FIG. 23 depicts a graph showing the global optimal encoding operational points according to some embodiments.

FIG. 24 depicts a video streaming system in communication with multiple client devices via one or more communication networks according to one embodiment.

FIG. 25 depicts a diagrammatic view of an apparatus for viewing video content and advertisements.

## DETAILED DESCRIPTION

Described herein are techniques for a video delivery system. In the following description, for purposes of explanation, numerous examples and specific details are set forth to provide a thorough understanding of some embodiments. Some embodiments as defined by the claims may include some or all the features in these examples alone or in combination with other features described below, and may further include modifications and equivalents of the features and concepts described herein.

## System Overview

A system may adaptively generate a list of encoding operational points that is used when encoding a video. The encoding operational points may be information that is used by an encoding system to encode the video, such as bitrates, resolutions, or other information. The encoding operational points may be used for different processes, such as when generating profiles for a profile ladder or as candidate average bitrates that are used to generate multiple candidate segments in a segment quality driven adaptive (SQA) processing process. In the SQA process, the list of encoding operational points may be referred to as candidate average bitrates (CABs). An encoder transcodes segments of the video using information, such as the respective bitrates, in the list of encoding operational points. In some embodiments, the system may dynamically select a list of encoding operational points for different portions of the video, such as for different chunks of the video. A chunk may be an independent encoding unit that an encoder encodes with the same settings. A video may include one or more chunks, and each chunk may include multiple portions, such as segments. A segment may be an independent analysis unit. For example, the segment may be decoded independently. Some examples of a segment may include a group of pictures that can be decoded together. In some embodiments, the list of encoding operational points may be set at the chunk level. Although the list of encoding operational points is discussed as being set at the chunk level, the list of encoding operational points may be set for different portions of the video. Also, for other types of content, the segment and chunk units may be used. However, there could be instances where these units may not be used, but other portion sizes may be defined. For example, a first portion that corresponds to the chunk may be defined as including a plurality of second portions that corresponds to the segments.

The encoder may encode segments of the video using the list of encoding operational points to generate multiple candidate segments. The SQA process may select segments from the candidate segments to use for profiles in a profile ladder. A target of the process is to optimize (e.g., minimize) the storage or delivery footprint of portions of the video while maintaining a similar quality. A profile ladder may be a list of profiles that are associated with different bitrates from the encoding operational points. When generating a profile ladder, the encoder may generate segments using the bitrates of the encoding operational points to generate segments for multiple profiles. The profile ladder may be used for adaptive bitrate streaming playback.

Each video may have different characteristics. Also, different portions within the same video may also have different characteristics. Using a static list of encoding operational points for all the portions of a video or for multiple videos may not provide optimal results. For example, a static list of encoding operational points may encode a video with simple video content with more bitrate than is needed. Also, a video with complex video content may be encoded with poor quality due to insufficient bitrate. Additionally, the static list of encoding operational points may generate segments with irregular quality gaps from an encoding perspective. For example, adjacent profiles may have similar video quality that is redundant to each other or may have unacceptable large quality gaps. Having similar video quality for adjacent profiles may be unnecessary and not provide many advantages in viewing quality. For example, if two bitrates in the list of encoding operational points result in encoded segments that have similar qualities, then encoding the segment with those two bitrates may be redundant, and may waste resources. Also, having a large quality gap may result in an adverse viewing experience during playback as the quality may change drastically when playback switches from one profile to another profile.

To overcome the above disadvantages, a pre-analysis optimization process may dynamically select encoding operational points in the list of encoding operational points for a video. To select the list of encoding operational points, the pre-analysis optimization process may analyze a portion of video and output an optimized list of encoding operational points for that portion. For example, the pre-analysis optimization process may analyze characteristics of each portion and output a list of encoding operational points for each portion. In some embodiments, the pre-analysis optimization process may predict characteristics of the portion, such as a rate distortion curve that describes the quality versus the bitrate for the portion. The pre-analysis optimization process uses the respective rate distortion curve to determine the optimal list of encoding operational points for each portion.

A chunk may have a large amount of segments. Also, segments may have content that has diverse characteristics. For example, some content for a segment in a chunk may be simple to encode, such as stationary or slow motion. However, some content for another segment in the chunk may be difficult to encode, such as quick motion or a detailed scene. If the same settings, or the same RD curve, are used for a chunk to determine the encoding operational points, an optimal encoding for all these segments of the chunk may not be achieved. Accordingly, the system may perform an optimized process to select the encoding operational points based on RD curves from segments of the chunk.

The system may generate characteristics, such as RD curves, for segments of the video. Then, the system may perform a clustering process to cluster segments into clusters. In some embodiments, a representative curve for each cluster may be determined. Thereafter, the system may perform a local optimization process and a global optimization process. The local optimization process may determine an optimal range for each representative RD curve. Then, the system may determine local optimal encoding operational points for each representative RD curve within the optimal range. In the global optimization process, the system may calculate global optimal encoding operational points from the local optimal encoding operational points of the respective representative RD curves. For example, the system may use representative RD curves for segments within a chunk to determine global optimal encoding operational points for the chunk.

Once the global optimal encoding operational points are determined, the system may use the global encoding operational points. For example, the system may use the global encoding operational points to generate profiles in a profile ladder or to generate respective candidate segments for the SQA process.

The optimization process provides many advantages. If the list of encoding operational points is set with static values for the entire video and/or is the same for multiple different videos, suboptimal transcoding may result. Different videos and also different portions of the same video may have diverse characteristics. Therefore, a static list of encoding operational points may be suboptimal for some videos or portions of a video. The use of a dynamic list of encoding operational points that is based on characteristics of portions of video may result in a higher quality video and viewing experience. For example, the segment quality-driven adaptive process may have a better selection of encoded segments to select from to form the profiles for the profile ladder. Also, the encoding operational points may generate better profiles for a profile ladder.

The use of clusters and representative RD curves may also result in reduced resource usage. For example, fewer RD curves may be analyzed, and the results may be determined faster. Also, the use of the local optimization process and the global optimization process is significantly more than analyzing the RD curves. The process results in an optimal range of encoding operational points for a chunk that represents characteristics of the respective segments of the chunk.

System

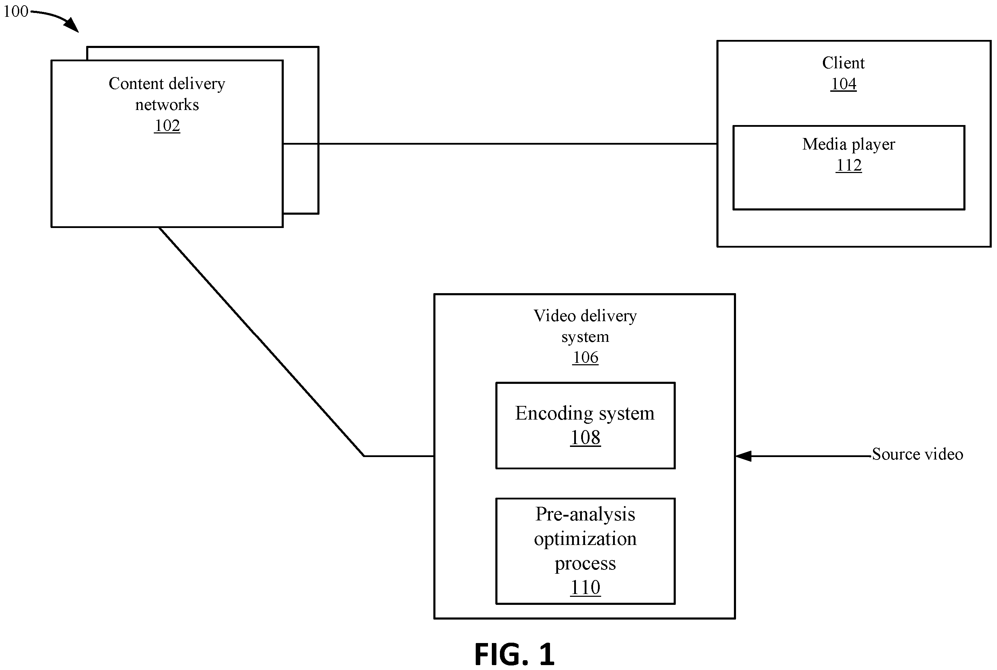

FIG. 1 depicts a system 100 for dynamically selecting a list of encoding operational points according to some embodiments. System 100 includes content delivery networks 102, clients 104, and a video delivery system 106. Source files may include different types of content, such as video, audio, or other types of content information. The term video may be used for discussion purposes, but other types of content may be appreciated, such as audio, images, etc. In some embodiments, a source file may be received in a format that requires encoding to another format, which will be discussed below. For example, the source file may be a mezzanine file that includes compressed video. The mezzanine file may be encoded to create other files, such as different profiles of the video.

A content provider may operate video delivery system 106 to provide a content delivery service that allows entities to request and receive media content. The content provider may use video delivery system 106 to coordinate the distribution of media content to a client 104 via content delivery networks 102. Although a single client 104 is discussed, multiple clients 104 may be using the service. The media content may be different types of content, such as on-demand videos from a library of videos and live videos. In some embodiments, live videos may be where a video is available based on the linear schedule. Videos may also be offered on-demand. On-demand videos may be content that can be requested at any time and not limited to viewing on a linear schedule. The videos may be programs, such as movies, shows, advertisements, etc.

Client 104 may include different computing devices, such as smartphones, living room devices, televisions, set top boxes, tablet devices, etc. Client 104 includes a media player 112 that can play content, such as a video. In some embodiments, media player 112 receives segments of video and can play these segments. Client 104 may send requests for segments to one of content delivery networks 102, and then receive the requested segments for playback in media player 112. The segments may be a portion of the video, such as six seconds of the video.

A video may be encoded in a profile ladder that includes multiple profiles. Each profile may correspond to different configurations, which may be different levels of bitrates or quality, but may also include other characteristics, such as codec type, computing resource type (e.g., computer processing unit), etc. Each video may have associated profiles that have different configurations. The profiles may be classified at different levels and each level may be associated with a different configuration. For example, a level may be combination of bitrate, resolution, codec, etc. In some embodiments, each level may be associated with a different bitrate, such as 400 kilobytes per second (kbps), 650 kbps, 1000 kbps, 1500 kbps, ... 12000 kbps. Also, each level may be associated with another characteristic, such as a quality characteristic (e.g., resolution). The profile levels may be referred to as higher or lower, such as profiles that have higher bitrates or quality may be rated higher than profiles with lower bitrates or quality. An encoder may use the characteristics to encode the source video. For example, the encoder may encode the source video with a target bitrate of 1500 kbps.

Content delivery networks 102 include servers that can deliver a video received from video delivery system 106 to client 104. Content delivery networks 102 receive requests for segments of video from client 104, and delivers segments of video to client 104. Client 104 may request a segment of video from one of the profile levels based on current playback conditions. The playback conditions may be any conditions that are experienced based on the playback of a video, such as available bandwidth, buffer length, etc. For example, client 104 may use an adaptive bitrate algorithm to select the profile for the video based on the current available bandwidth, buffer length, or other playback conditions. Client 104 may continuously evaluate the current playback conditions and switch among the profiles during playback of segments of the video. For example, during the playback, media player 112 may request different profiles of the video asset. For example, if low bandwidth playback conditions are being experienced, then media player 112 may request a lower profile that is associated with a lower bitrate for an upcoming segment of the video. However, if playback conditions of a higher available bandwidth are being experienced, media player 112 may request a higher-level profile that is associated with a higher bandwidth for an upcoming segment of the video.

An encoding system 108 may encode segments using a list of encoding operational points. When using an SQA process, encoding system 108 selects segments for each profile using an optimization process. For example, encoding system 108 may adaptively select a segment with an optimal bitrate for each profile of the profile ladder while maintaining similar quality levels. The SQA process allows the system to maintain similar or matching quality to the target bitrate while minimizing the number of bits required to store or deliver the content. Alternatively, when generating a profile ladder, encoding system 108 encodes the segments using the encoding operational points for a respective chunk in which the segment is associated. The encoded segments then form profiles in a profile ladder for the video. The profiles that are formed for segments in different chunks may be optimized based on the characteristics of segments within each chunk.

A pre-analysis optimization process 110 may dynamically generate a list of encoding operational points for portions of a video, such as chunks. In some embodiments, pre-analysis optimization process 110 may predict respective characteristics of a portion of video, such as a rate distortion curve based on characteristics of respective segments of the chunk. Then, pre-analysis optimization process 110 selects encoding operational points for the chunk based on analyzing the respective characteristics of the segments of the chunk.

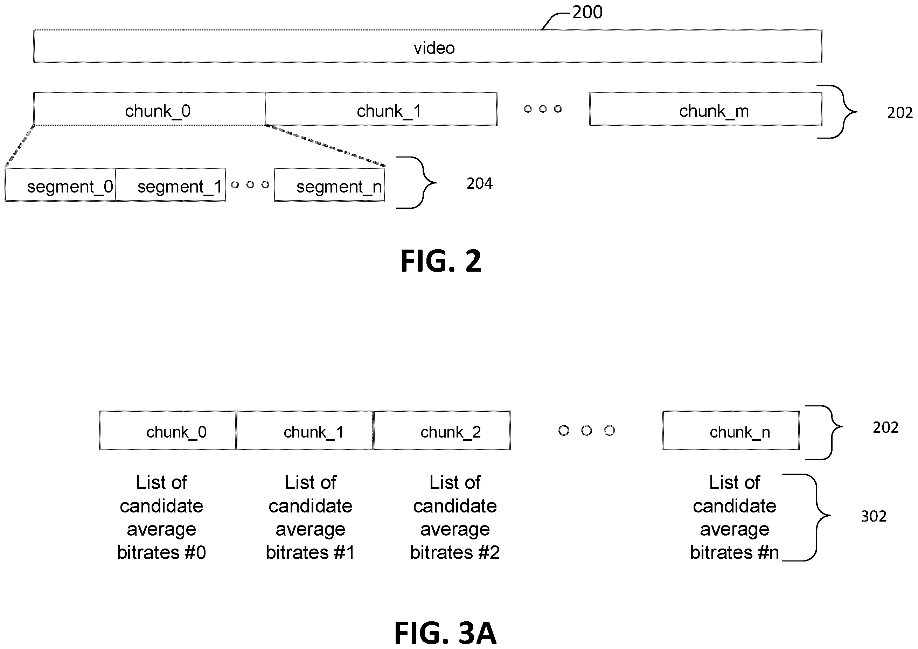

As discussed above, optimization process 110 may dynamically select a list of encoding operational points for portions of a video. The portion of video may be different sizes. FIG. 2 shows an example of portions of a video according to some embodiments. A video 200 may be divided into different portions at a segment level and a chunk level. In some embodiments, at 202, video 200 may be divided into chunk level portions. For example, multiple chunks of chunk_0, chunk_1, ..., chunk m may be included in video 200. Each respective chunk may be divided into smaller portions, which may be referred to as segments. For example, at 204, chunk_0 is divided into segments of segment_0, segment 1, ..., segment_n. Similarly, although not shown, chunk_1 may be divided into its own respective segments of segment_0, segment 1, ..., segment_n. The segments may be shorter in length than the chunks.

In the segment quality driven adaptive process, encoding system 108 may process each segment of video 200 to generate multiple encodings of each respective segment based on a list of encoding operational points. For discussion purposes, optimization process 110 selects a list of encoding operational points per chunk; however, the list of encoding operational points may be selected for different portion sizes, such as per segment, for multiple chunks, etc. The bitrates included in each respective list of encoding operational points may be optimized based on characteristics associated with the respective portion of video that will use the list of encoding operational points (e.g., a chunk and/or segments). Given different characteristics for different chunks, respective lists of encoding operational points may be different. However, it may be possible that bitrates for multiple chunks in respective lists of encoding operational points are the same.

The following will now describe the segment quality driven adaptive processing process and then the dynamic selection of the list of encoding operational points in more detail.

Segment Quality Driven Adaptive Process

FIG. 3A depicts an example of the generation of lists of encoding operational points according to some embodiments. At 202, chunks are shown of chunk 0, chunk_1, chunk_2, ..., chunk_n. At 302, optimization system 110 has selected a list of encoding operational points for each chunk based on characteristics of each respective chunk. For example, for chunk 0, a list of encoding operational points #0 is based on the characteristics for chunk_0. Also, a list of encoding operational points #1 is based on the characteristics for chunk_1, and so on. In some examples, for chunk_0, the list of encoding operational points #0 may include the bitrates of 8500, 7750, 7000, 6250, 5500, 4750, 4000, 3250 Kilobytes per second (Kbps). For chunk_1, the list of encoding operational points #1 may include the bitrates of 7000, 6250, 4750, 4000, 3250, 2000, 1250 Kbps.

The list of encoding operational points may include bitrates that are used by an encoder to encode a respective segment. Conventionally, the encoding operational points may have statically included the same bitrates. Sometimes, two types of bitrates were used for all chunks. A first type may be a target average bitrate and a second type may be an intermediate average bitrate. The target average bitrate may be a basic bitrate that is associated with profiles in a profile ladder for adaptive bitrate encoding. An intermediate average bitrate may be a supplement to the target average bitrate. For example, additional bitrates in between target average bitrates may be added. The use of intermediate average bitrates may provide additional bitrates to encode additional encoded segments that may have different characteristics than the encoded segments from the target average bitrates, such as quality. In some cases, optimization process 110 may include bitrates from the target average bitrate and/or the intermediate average bitrates in the list of encoding operational points. For example, optimization process 110 may include the target average bitrates in the list of encoding operational points, but dynamically select other bitrates. In other examples, optimization process may dynamically select the bitrates in the list of encoding operational points based solely on the characteristics of the chunk.

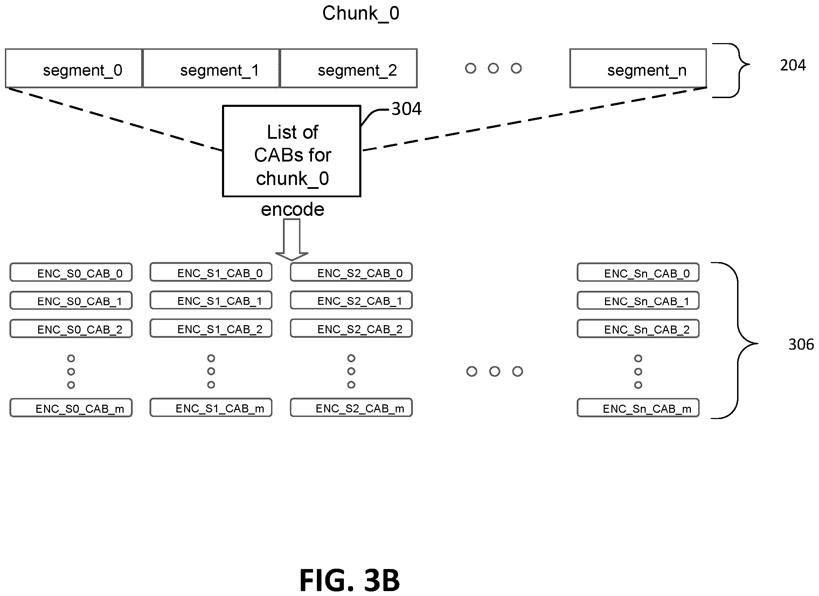

As discussed above, an encoder generates encoded segments for a chunk. FIG. 3B depicts an example of the generation of encoded segments according to some embodiments. At 204, segments for a chunk of chunk_0 are shown of segment_0, segment 1, segment_2, ..., segment_n. At 304, a list of encoding operational points (list of CABs) for chunk_0 is used. In some embodiments, the same list of encoding operational points for chunk_0 is used for all segments of the chunk. However, multiple different lists of encoding operational points could be used for different segments of the chunk. Then, an encoder encodes the segments of chunk_0 using the list of encoding operational points.

At 306, encoded segments for each respective segment are listed. For a respective segment, an encoder encodes the segment using the average bitrates in the list of encoding operational points. The encoder may target the respective average bitrate when encoding the segment. This results in a set of encoded segments for each segment of the chunk, such as encoded segments for segment_0 of ENC_S0_CAB_0, ENC_S0_CAB_1, ENC_S0_CAB_2, ..., ENC_S0_CAB_n. In the notation, ENC_S0 represents the encoded segment of segment_0, and CAB_0, CAB_1, CAB_2, etc. represents the encoding operational points. For example, CAB_0 may be 8500 Kbps, CAB_1 may be 7750 Kbps, and CAB_2 may be 7000 Kbps. Each encoded segment may be encoded at the same quality level, such as 1080p. The process may be repeated for another quality level using the list of encoding operational points.

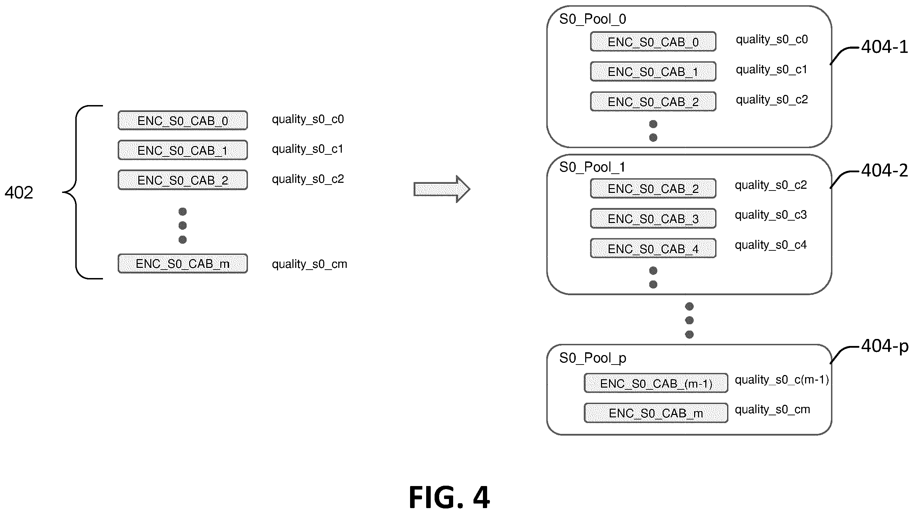

For each segment, optimization process 110 clusters the encoded segments into multiple pools. Each pool may correspond to one profile. FIG. 4 depicts an example of clustering encoded segments into multiple pools according to some embodiments. At 402, multiple encoded segments are shown for the encoding operational points. Each segment may have an associated value for a quality metric. For example, encoded segment ENC_S0_CAB_0 may have a quality of quality_S0_c0 and encoded segment ENC_S0_CAB_1 may have a quality of quality_S0_c1, etc. In the notation, quality_S0 represents the encoded segment of segment_0, and c0, c1, c2, etc. represents the quality for this encoded segment.

Different methods may be used to include encoded segments in pools 401-1, 404-2. 404-p. For example, each pool may have or may be associated with a profile. A respective profile may be associated with a target bitrate, which may be the maximum bitrate that can be used to encode a segment in the associated profile. Encoding system 108 may include encoded segments starting with the highest average bitrate that can be used for the associated profile for the pool. Then, encoding system 108 may add other encoded segments at other bitrates that are less than the maximum bitrate. This may result in different encoded segments that are included in respective pools. For example, pool S0_Pool_0 may include segments ENC_S0_CAB_0, ENC_S0_CAB_1, ENC_S0_CAB_2, etc. Also, pool S0_Pool_1 may include encoded segments ENC_S0_CAB_2, ENC_S0_CAB_3, ENC_S0_CAB_4, etc. Accordingly, pool S0_Pool_1 may include an encoded segment starting at a bitrate that is less than the maximum bitrate in pool S0_pool_0. If the encoded segments are encoded at the bitrates of 8500, 7750, 7000, 6250, 5500, 4750, 4000, 3250 Kbps, pool S0_pool_0 may start with the encoded segments at the average bitrates of 8500, 7750, 7000, etc., and pool S0_pool_1 may start with the encoded segments at the average bitrates of 7000, 6250, 5500, etc. In some examples, the example bitrates for the pools may be pool_0: 8500, 7700, 7000, 6250, 5500, 4750, pool_1: 7000, 6250, 5500, 4750, 4000, and pool_p: 5500, 4750, 4000, 3250.

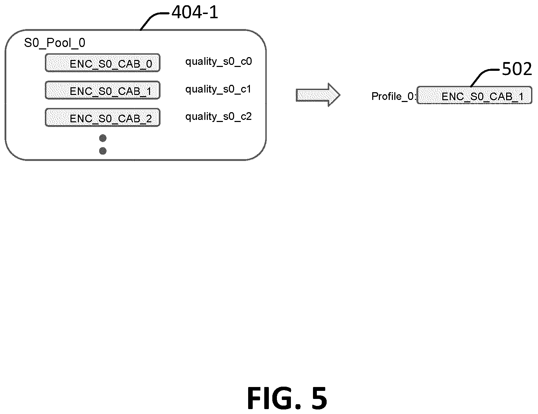

From each pool, encoding system 108 may select one encoded segment based on using a selection process. FIG. 5 depicts an example of the selection process according to some embodiments. The following process may be performed for each pool. At 404-1, pool S0_pool_0 from FIG. 4 is shown with its respective encoded segments. Encoding system 108 may use one or more rules to select an encoded segment for each respective pool. At 502, encoding system 108 selects encoded segment ENC_S0_CAB_1 for pool S0_pool_0. In some embodiments, encoding system 108 may attempt to select an encoded segment with a minimum bitrate that has a quality value that meets a criterion. In some examples, encoding system 108 may start from the first encoded segment in the pool, such as the segment with the highest bitrate. Then, encoding system 108 selects an adjacent encoded segment in the pool, such as the encoded segment with the next highest bitrate. If the first encoded segment and the second encoded segment have a similar quality (e.g., within a threshold), encoding system 108 selects the encoded segment with the lowest bitrate. encoding system 108 may continue the comparison using the second encoded segment and an adjacent encoded segment in the pool, such as a third encoded segment. The process may end when an adjacent encoded segment does not have a similar quality. Other methods may also be used, such as starting from the encoded segment with the lowest bitrate. Also, the process may select a segment with a lowest bitrate that has a quality within a threshold of another segment, such as a segment with the highest bitrate. The following will describe an example of the process using a rate distortion curve.

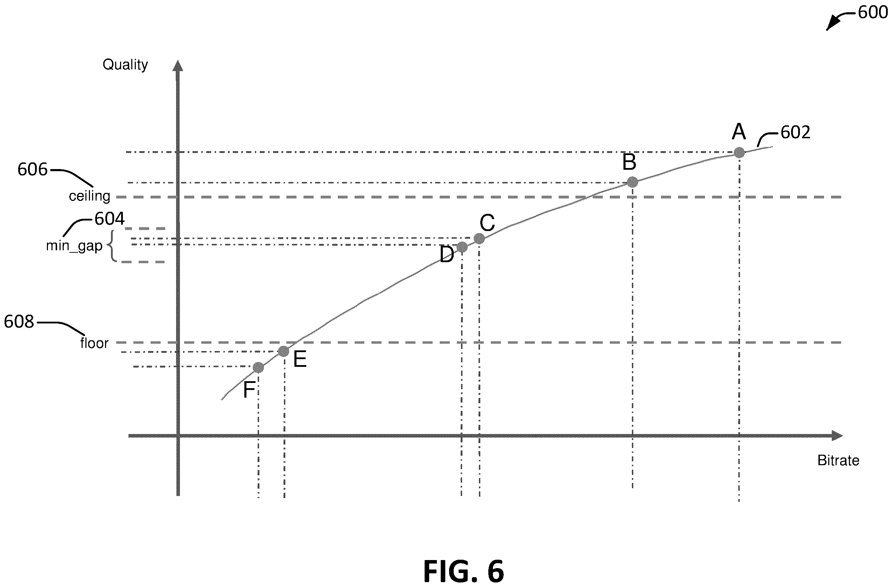

FIG. 6 depicts an example of a graph 600 of a rate distortion curve that may be used to select encoded segments for pools according to some embodiments. In graph 600, the Y-axis is quality and the X-axis is bitrate. A curve 602 defines the relationship between quality and bitrate. For example, the curve may plot rate and distortion of the segment or chunk, but the curve may plot other characteristics of quality and bitrate.

The encoded segments may be listed as A, B, C, D, E, F on the curve 602 based on the respective rate and distortion of the encoded segments. At 604, an example of encoded segments that have similar quality is shown. In this case, encoded segment C and encoded segment D have similar bitrates and similar quality. For example, the quality difference between encoded segment C and encoded segment D may meet a threshold min_gap (e.g., be equal to and/or less than). In this case, since the quality difference is minimal, encoding system 108 may select encoded segment D because this encoded segment has a lower bitrate compared to encoded segment C, but segment D offers a similar quality compared to segment C.

Encoding system 108 may also collapse encoded segments whose quality are beyond the ceiling boundary. For example, a ceiling boundary at 606 may be a boundary that is used to determine encoded segments as candidates to collapse. In this case, encoding system 108 may select one or more of the segments above the ceiling threshold, such selecting only one segment (e.g., segment B), or selecting less of the segments found above the ceiling threshold (e.g., selecting two of four segments). In other examples, encoded segments A and B may be removed. Also, encoding system 108 may remove encoded segments whose quality is below a floor boundary. For example, at 608, a floor threshold is shown. Encoding system 108 may select one or more of the segments below the floor threshold, such selecting only one segment (e.g., segment F), or selecting less of the segments found below the floor threshold. In other examples, encoded segments E and F may be removed. The ceiling threshold and the floor threshold may be used to limit the segments for a profile that exceed a desired bitrate or quality, or are lower than a desired bitrate or quality. One reason a ceiling is used is to limit the bitrate that is used to encode a segment and one reason a floor is used is to limit bitrates that are used that are too low. After processing of the encoded segments to remove encoded segments, encoding system 108 may select a segment for the profile. For example, encoding system 108 may select the encoded segment with the lowest bitrate that has a quality level that meets a threshold, such as withing a gap to the highest quality segment. In this case, encoding system 108 may select encoded segment D.

Although the above rules may be used to select segments, other processes may be used. For example, the selection of an encoded segment may be based on which encoded segments have been selected for other profiles. In some examples, the segment that is selected may be based on reducing the storage of encoded segments where profiles may reuse segments from other profiles. Accordingly, encoding system 108 may optimize the quality and minimize the bitrate used for encoded segments that are found in between the floor and ceiling.

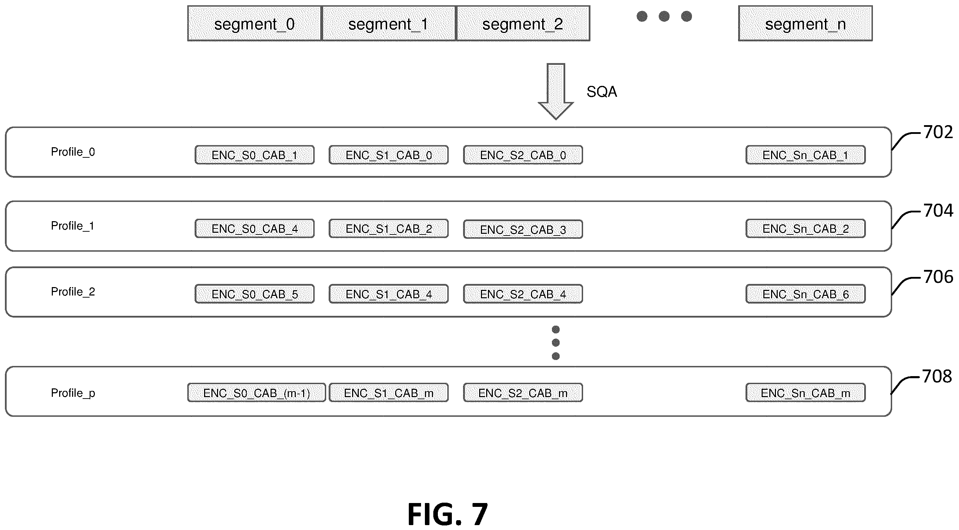

FIG. 7 depicts an example of the selected encoded segments for profiles for each segment according to some embodiments. At 702, 704, 706, and 708, the encoded segments are shown for Profile_O, Profile_1, Profile_2 and Profile_p, respectively. Within a profile, encoding system 108 may select different encoded segments with different encoding operational points for different segments. For example, for profile_O, segment_0 was encoded using encoding operational point CAB_1, segment_1 was encoded using encoding operational point CAB_0, segment_2 was encoded using encoding operational point CAB_0, etc. In some examples, in profile_0, segment_0 was encoded using the bitrate 7750 Kbps, segment 1 was encoded using the bitrate 8500 and segment_2 was encoded using the bitrate 8500 Kbps. For profile_1, segment 0 was encoded using CAB_4, segment_1 was encoded using CAB_2 and segment_2 was encoded using CAB_3. For example, in profile 1, segment 0 was encoded using the bitrate 5500 Kbps, segment_1 was encoded using the bitrate 7000 Kbps and segment_2 was encoded using the bitrate 6250 Kbps.

The following will now describe the optimization process to dynamically generate a list of encoding operational points.

Optimization Process

As discussed above, video content may have diverse characteristics, such as content in different videos may have different characteristics and also content within the same video may have different characteristics. For example, some content may be simple to encode, such as a cartoon or news. Cartoons may have characteristics of big color blocks and simple/obvious textures/edges. News may have characteristics of still scenes or shots of moderate movement. However, some content may be difficult to encode, such as in live action movie or sports. Sports is opposite to news because sports may have characteristics of fast movement in the whole video not only for the camera but also for the players of the game. Live action may have characteristics of many rich details, colors, and other characteristics like film grain. Accordingly, the characteristics for the encodings may be different. The following will describe different characteristics for content.

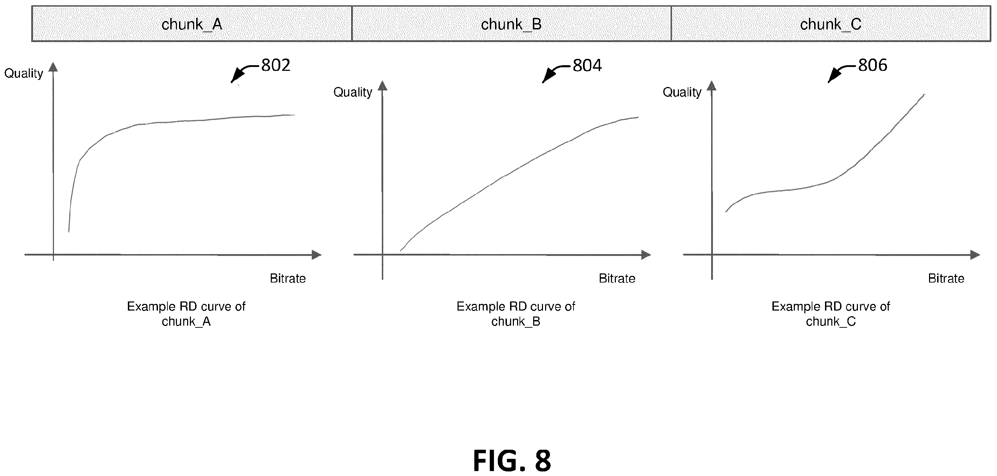

FIG. 8 depicts an example of different rate distortion curves for video content according to some embodiments. A rate distortion curve is used to illustrate the relationship between quality and bitrate, but other metrics may be used to show the relationship between quality and bitrate for video content. The different rate distortion curves may be illustrated for different chunks of a video; however, the rate distortion curves may be different for different portions of a video, such as segments, chunks, multiple chunks, or different videos.

Three chunks of chunk_A, chunk_B, and chunk_C are shown with graphs 802, 804 and 806, respectively, of rate distortion curves for the chunks. In graph 802, the quality changes with a steep slope at lower bitrates, but at higher bitrates, the quality does not change very much. In graph 804, the quality changes as bitrate increases with a steady relationship. In graph 806, the quality at lower bitrates may only minimally change, while the quality increases with a steep slope at higher bitrates.

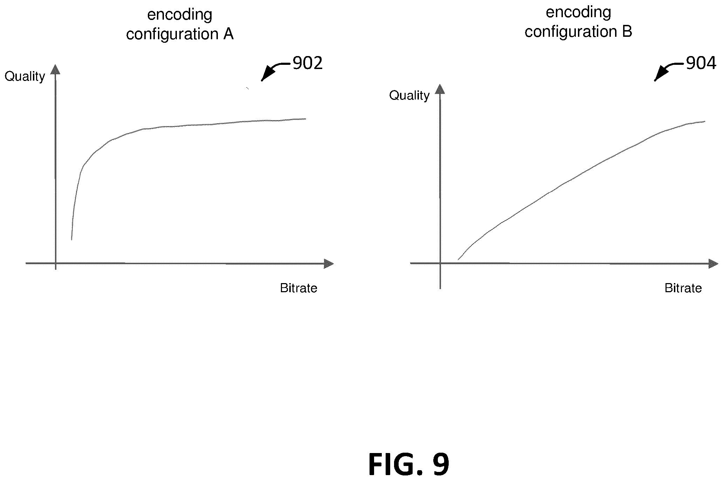

In addition to different content producing different rate distortion curves, different encoding configurations may also produce different encoding results. Different encoding configurations may include using a different encoder "(e.g., x264, x265, etc.) or different encoding parameters (rate distortion optimization (RDO) level, B-frames, reference number, etc.). FIG. 9 shows different characteristics using different encoding configurations according to some embodiments. For the same segment or chunk, the first encoding configuration at 902 produces different characteristics compared to a second encoding configuration shown at 904. An encoding configuration A produces a rate distortion curve similar to chunk_A above and encoding configuration B produces a rate distortion curve similar to chunk_B above even though these rate distortion curves are for the same content.

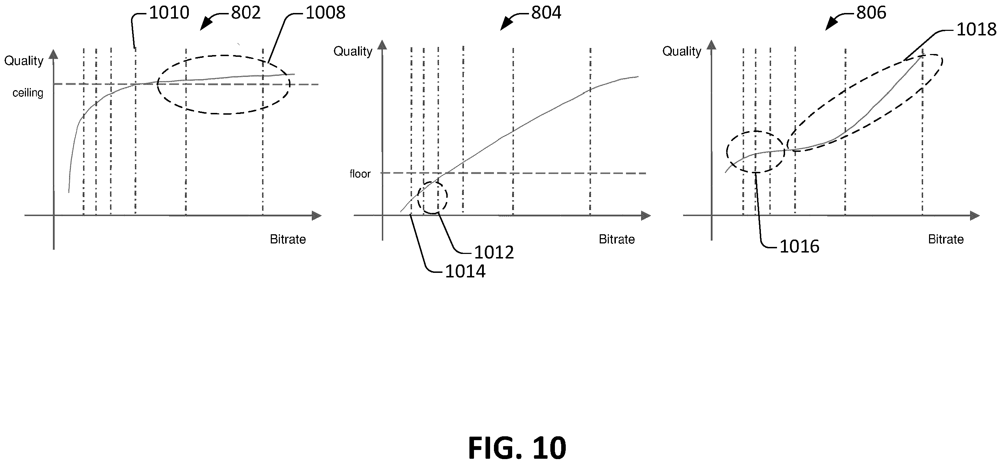

Considering the above rate distortion curves may differ, using a static list of encoding operational points may not be optimal. For example, using the same list of encoding operational points for different rate distortion curves may not produce optimal results. FIG. 10 depicts an example of using static encoding operational points for different rate distortion curves according to some embodiments. Graphs 802, 804 and 806 depict the different rate distortion curves for different chunks that were shown in FIG. 8. The dotted lines in each graph show the different bitrates of the list of encoding operational points. Some problems may result when using the fixed list of encoding operational points. For example, in graph 802, at 1008, the two highest encoding operational points may be redundant because they have similar qualities with the third encoding operational point at 1010. That is, only one bitrate may need to be encoded, such as at the bitrate listed at 1010, to provide an encoded segment with similar quality.

In graph 804, at 1012, the two encoding operational points may be redundant because these two encoded segments have similar qualities compared to an encoded segment with the next lowest bitrate shown at 1014. Similar to above, only one bitrate may need to be encoded, such as at the lowest bitrate at 1014, to provide an encoded segment with similar quality.

In graph 806, at 1016, the lowest three encoding operational points may produce encoded segments that have similar qualities. Also, at 1018, the encoding operational points may be too far apart because the difference in quality may be too great between the encoded segments. That is, may be more desirable to have more encoding operational points with less quality difference to minimize the difference in quality between the encoding operational points.

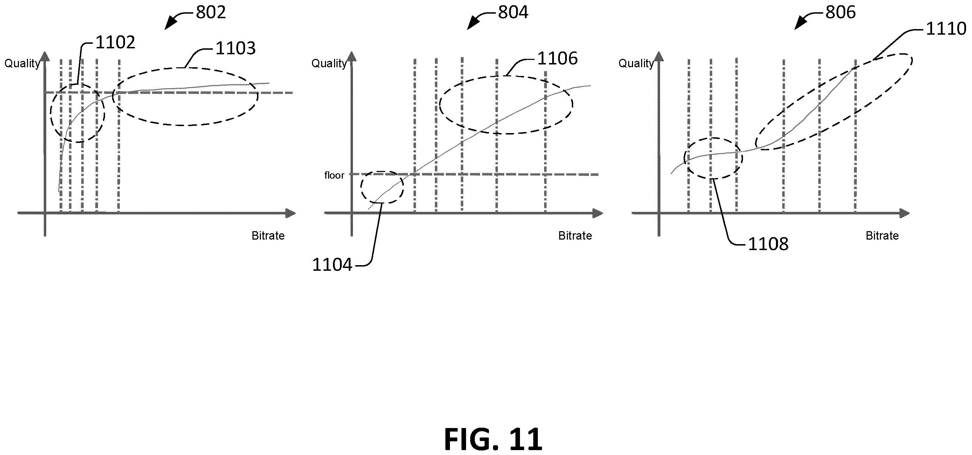

FIG. 11 depicts an optimized list of encoding operational points according to some embodiments. In graph 802, encoding system 108 may dynamically select the encoding operational points to optimize the quality found in the encoded segments. For example, at 1102, encoding system 108 may increase a number of encoding operational points at bitrates where the curve is steep. Also, at 1103, encoding system 108 may reduce the number of encoding operational points where the curve does not change quality very much.

In graph 804, at 1104, encoding system 108 may remove encoding operational points from the lowest bitrates where the quality may be redundant. Also, at 1106, encoding system 108 may add additional bitrates to capture the changing quality at higher bitrates.

In graph 806, at 1108, encoding system 108 may remove bitrates at the lower end of the curve. Also, at 1110, encoding system 108 may space the encoding operational points more evenly to capture different levels of quality in more even increments.

Pre-analysis Optimization Process Design

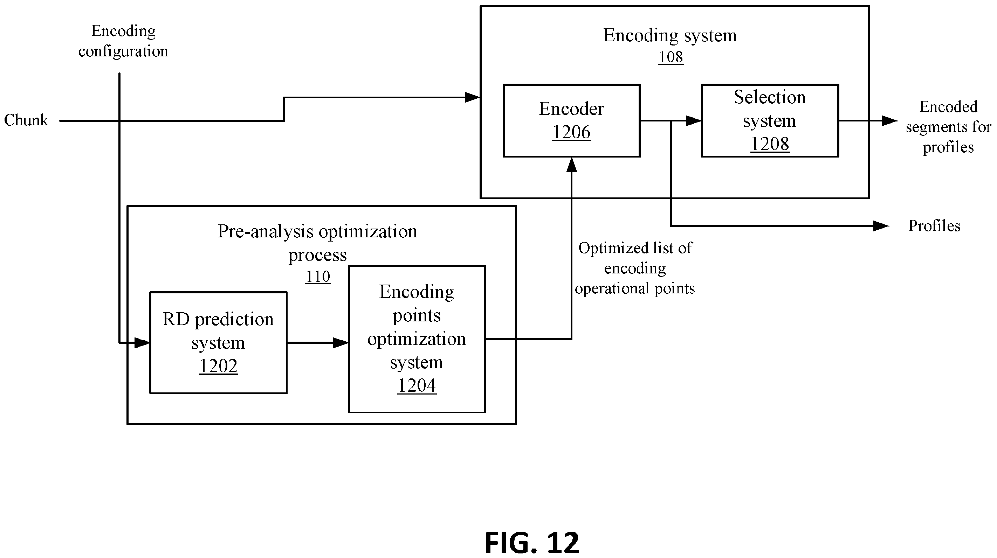

FIG. 12 depicts a more detailed example of encoding system 108 and pre-analysis optimization process 110 according to some embodiments. A chunk to be encoded is received. Also, an encoding configuration may be received that defines settings for encoding the chunk. The encoding configuration may include an encoder type, quality level, etc.

Pre-analysis optimization process 110 may receive the chunk and the encoding configuration, and output an optimized list of encoding operational points. An RD prediction system 1202 may predict a rate distortion curve for segments in the chunk and/or the chunk. Although predicting rate distortion curves for segments or chunks may be described, the rate distortion curves may be generated for different portions of the video, such as for multiple chunks and/or multiple segments. In some embodiments, RD prediction system 1202 may use machine learning logic to generate the prediction of rate distortion curves for segments.

The predicted rate distortion curves are output to encoding points optimization system 1204. Encoding points optimization system 1204 may generate a list of encoding operational points for a chunk, such as based on the predicted rate distortion curves for the segments in the chunk. The optimized list of encoding operational points may be based on the characteristics of respective chunks and may be different for chunks that have content with different characteristics. A chunk may have a large amount of segments and the segments may have content that has diverse characteristics. For example, some content for a segment in a chunk may be simple to encode, such as stationary or slow motion. However, some content for another segment may be difficult to encode, such as quick motion or a detailed scene. If the same RD curve is used for a chunk to determine the encoding operational points, an optimal encoding of the chunk may not be achieved. Accordingly, encoding points optimization system 1204 may perform an optimized process to select the encoding operational points based on RD curves from segments of the chunk. This process will be described in more detail below.

Encoding points optimization system 1204 outputs an optimized list of encoding operational points to encoding system 108. Encoding system 108 receives the encoding configuration, the chunk, and the optimized list of encoding operational points. Then, encoder 1206 uses each encoding operational points in the list to encode each segment of the chunk. That is, encoder 1206 encodes a segment for each bitrate of the encoding operational points. After encoding each segment using the list of encoding operational points, for the SQA process, selection system 1208 selects an encoded segment for each profile in a profile ladder using a selection process as described above. Selection system 1208 outputs encoded segments that are selected for the profiles in the profile ladder. When the process is generating a profile ladder, the encoded segments for the encoding operational points that are output by encoder 1206 may be used in the profile ladder.

The following will describe the prediction of the characteristics of a segment and then the optimization to select the list of encoding operational points.

RD Prediction System

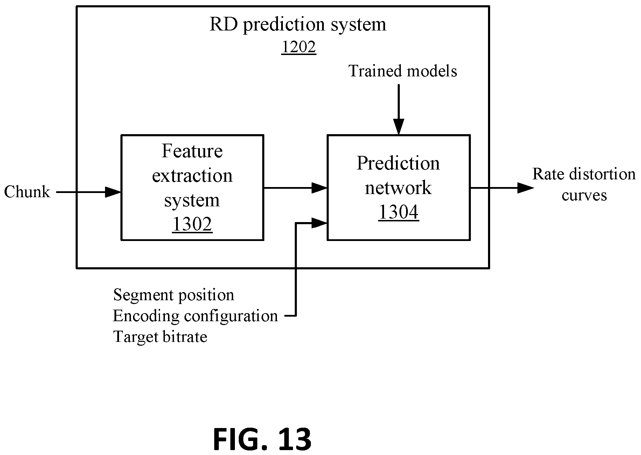

FIG. 13 depicts a more detailed example of RD prediction system 1202 according to some embodiments. A feature extraction system 1302 receives a chunk of video. Feature extraction system 1302 may then extract values for features that may convey information related to video transcoding. Some examples of features may be about the video content, encoding settings, etc. The features that are extracted may provide better predictions of the characteristics of the segments of the chunk. The values for the features are output to a prediction network 1304.

Prediction network 1304 may use trained models to generate characteristics for segments of the chunk, such as a predicted rate distortion curve. Prediction network 1304 may use different machine learning algorithms, such as support vector machine (SVM) regression, convolution neural networks (CNN), boosting, etc. Trained models may be trained based on the specific machine learning algorithm.

Prediction network 1304 may receive the values for the features in addition to other input, such as the segment position, an encoding configuration, and a target bitrate. The segment position may be the segment position (e.g., which segment in the video) in which to generate a rate distortion curve, the encoding configuration may include configuration will be used to encode the segment, and the target bitrate may include the output bitrate range for the segments. Prediction network 1304 may output rate distortion curves for the segments between the output bitrate range based on the features.

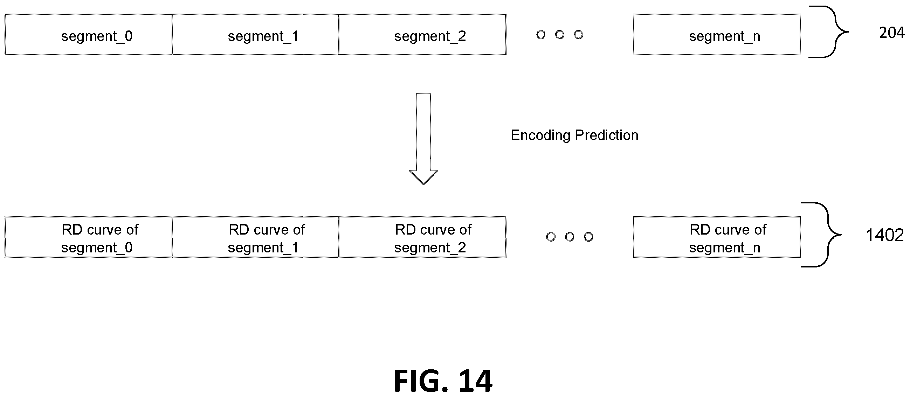

FIG. 14 depicts the output of prediction network 1304 according to some embodiments. At 204, segments for a chunk include segment_0, segment_1, segment_2, ..., segment_n. A rate distortion curve may be generated for each segment in each chunk of the video. For example, at 1402, rate distortion curves are output for each respective segment. A rate distortion curve of segment_0, a rate distortion curve of segment_1, etc. are shown. Each rate distortion curve is based on characteristics for a respective segment. The list of encoding operational points for the chunk may be generated based on the rate distortion curves. Also, a chunk level rate distortion curve may be output.

Encoding Operational Point Selection

Different segments may have different optimal encoding operational points. However, for encoder 1206, one set of encoding operational points may be used for a portion, such as each chunk. The following process may optimize the encoding operational points based on a first portion of the video, such as a segment level optimization, and a second portion of the video, such as a chunk level optimization. The segment level optimization may be referred to as a local optimization, and the chunk level optimization may be referred to as a global optimization. Encoding points optimization system 1204 may determine the optimal results based on balancing the local optimization and the global optimization.

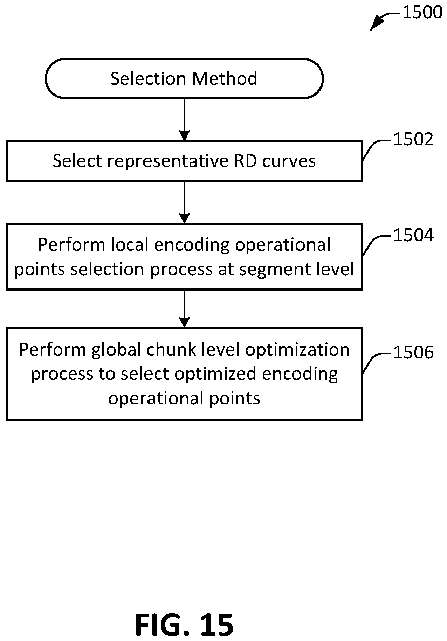

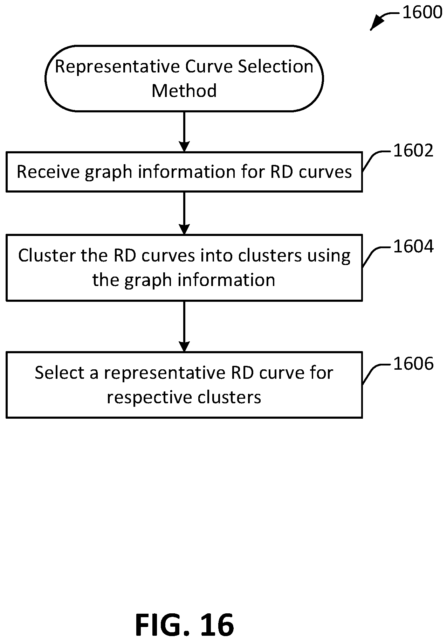

FIG. 15 depicts a simplified flowchart 1500 of a method for selecting encoding operational points according to some embodiments. The following process may be performed for each chunk in the video. Encoding points optimization system 1204 receives RD curves for segments of the chunk. Then, at 1502, encoding points optimization system 1204 selects representative RD curves. The representative RD curves may be based on clusters of RD curves that are determined from the RD curves of the segments in the chunk. The representative RD curves selection will be described in more detail starting at FIG. 16.

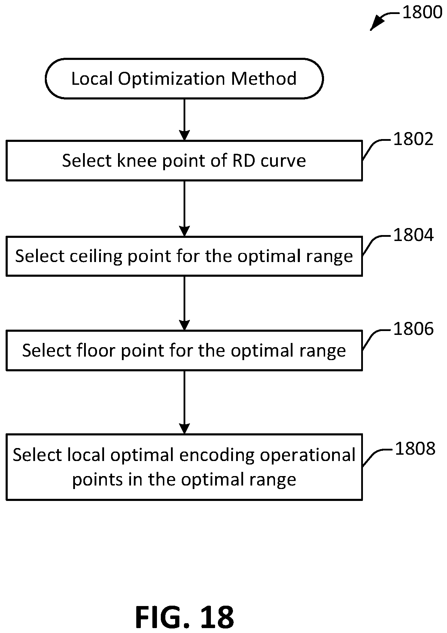

At 1504, encoding points optimization system 1204 performs a local segment level encoding operational point selection process at the segment level. The local encoding operational point selection process may determine local optimal encoding operational points for each representative RD curve for each segment of the chunk. The local optimization process will be described in more detail starting at FIG. 18.

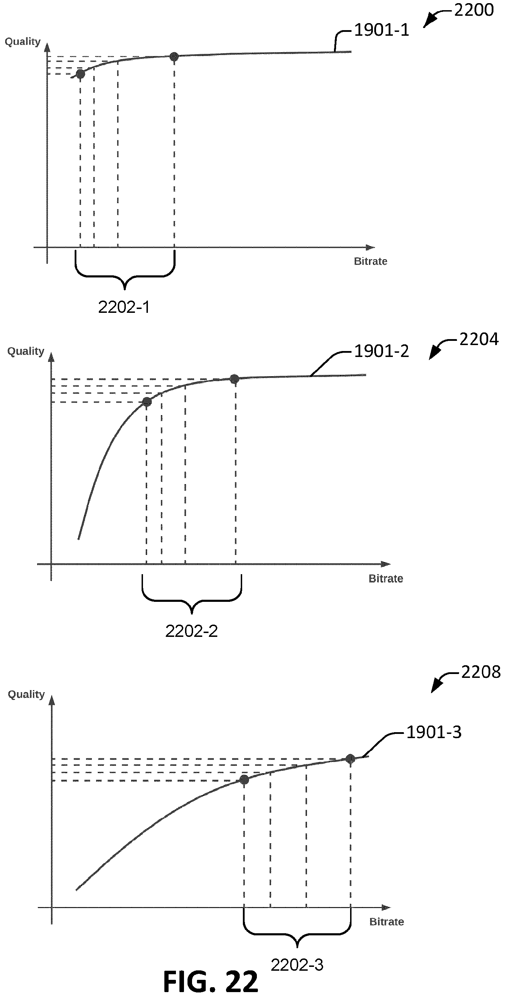

At 1506, encoding point optimization system 1204 may perform a global chunk level optimization process to select optimized encoding operational points for each chunk. For example, encoding points optimization system 1204 may combine the local optimal encoding operational points that were selected at the segment level to form the optimized encoding operational points for a chunk. In some embodiments, the combination may weight local optimal encoding operational points differently, such as based on the cluster in which the local optimal encoding operational points are associated. Clusters that are considered more important may be weighted higher and their local optimal encoding operational points may influence the optimized encoding operational points for the chunk more. The global optimization process will be described in more detail starting at FIG. 22. Once determining the encoding operational points for a chunk, encoder 1208 may use the encoding operational points to encode segments of the chunk.

The following will now describe the representative curve selection process.

Representative Curve Selection Process

The following process may be performed for each chunk in the video. There may be a large amount of segment level RD curves. The representative curve selection process may select representative curves that may optimally represent the RD curves for most of the segment level content characteristics in the chunk. The use of representative curves may improve the process because fewer RD curves may be analyzed while still representing most of the content characteristics of the segments. Also, the process may be performed faster because the fewer RD curves may be analyzed. Although representative curves are described, they may not be used. For example, each RD curve may be analyzed.

FIG. 16 depicts a simplified flowchart 1600 for selecting a representative curve according to some embodiments. At 1602, encoding points optimization system 1204 receives graph information for RD curves. The graph information may be based on characteristics of the RD curves from segments of a chunk. For example, the graph information may be characteristics of each RD curve, such as coordinates and a slope of sampling points of the RD curves.

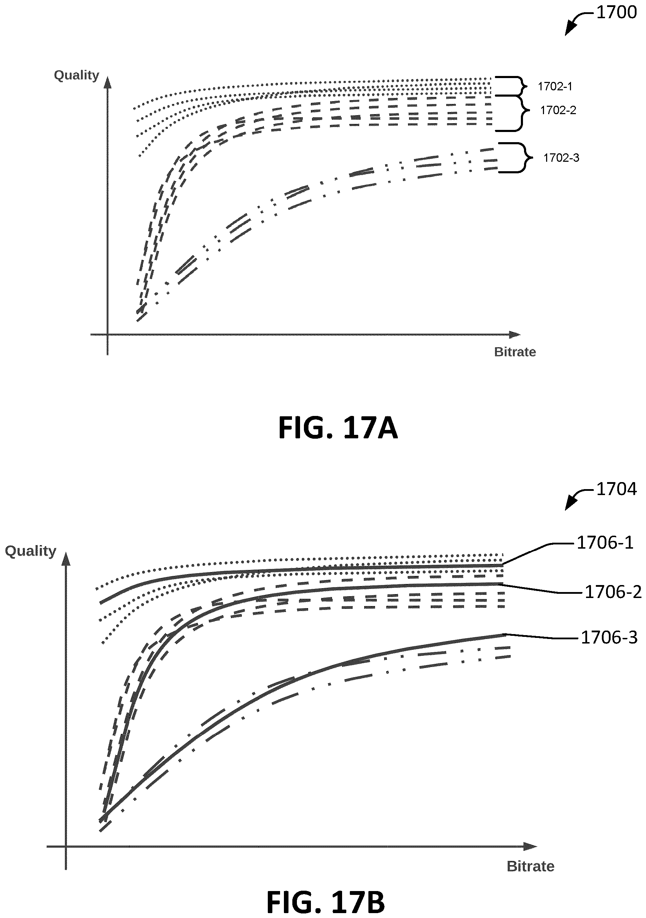

At 1604, encoding points optimization system 1204 clusters the RD curves into clusters using the graph information. The clusters may include RD curves that have similar characteristics. The clustering process may use different clustering algorithms, such as K-Means clustering, BIRCH clustering, or other clustering methods. The clustering process will be described in more detail in FIG. 17A.

At 1606, encoding points optimization system 1204 selects a representative RD curve for the respective clusters. Different methods may be used to select a representative RD curve for a respective cluster, such as selecting one of the RD curves that is based on or is the average of RD curves of the cluster or creating a new RD curve that represents the cluster. The representative RD curve may be analyzed in place of the RD curves in the cluster. FIG. 17B describes the selection process in more detail.

FIG. 17A depicts an example of RD curves for segments of a chunk according to some embodiments. The Y-axis shows quality and the X-axis shows bitrate. Graph 1700 depicts RD curves with different characteristics. For example, the characteristics of the RD curves may include different quality values at different bitrate values. Encoding points optimization system 1204 may determine clusters of RD curves that include similar characteristics that are within a range. For example, the clusters may be formed at 1702-1, 1702-2, 1702-3. The respective RD curves within respective clusters are shown with different dotted lines (cluster 1702-1), dashed lines (cluster 1702-2), or dotted and dashed lines (cluster 1702-3).

Each cluster 1702 may include different numbers of RD curves. For example, cluster 1702-1 includes four RD curves, cluster 1702-2 includes five RD curves, and cluster 1702-3 includes three RD curves. It is noted that this example may be simplified, and the number of RD curves in respective clusters may differ. In another example, cluster 1702-3 may be the smallest cluster with five RD curves, cluster 1702-1 may be a medium sized cluster with 20 RD curves, and cluster 1702-2 may be the largest cluster with 150 RD curves.

The number of clusters that are determined may be affected based on the configuration settings, such as the maximum number of clusters that can be formed and the distance threshold between all RD curves in the cluster. For example, a setting of a maximum cluster number and a setting of a loss threshold may be used. The maximum cluster number may be the maximum number of clusters that can be formed, where the number of clusters may be equal to or less than the maximum number of clusters. The loss threshold may be the distance threshold between all RD curves in a respective cluster. That is, RD curves cannot have values more than the distance threshold. Encoding points optimization system 1204 may analyze the characteristics of the RD curves based on the configuration settings to determine the clusters.

FIG. 17B depicts a graph 1704 for selecting a representative RD curve for respective clusters according to some embodiments. Graph 1704 includes the same RD curves and clusters as shown in FIG. 17A. Encoding points optimization system 1204 may select a representative curve using different processes. For example, encoding points optimization system 1204 may select a representative RD curve as a curve that is closest to the center of the cluster, which may have the minimum total distance to each curve in the cluster. Also, encoding points optimization system 1204 may create an RD curve as the representative RD curve based on the RD curves of the cluster, such as an RD curve that is the average of all RD curves in the cluster. Other methods may also be used. In this example, a representative RD curve is shown with a solid line for each cluster and other RD curves in the cluster are shown with dotted, dashed, or dotted and dashed lines. Representative RD curves are shown at 1706-1, 1706-2, and 1706-3 for clusters 1702-1, 1702-2, and 1702-3, respectively. Although one representative RD curve is selected in this example, encoding points optimization system 1204 may select multiple RD curves for a cluster.

Table I describes pseudocode that could be used to determine a representative RD curves for clusters. The pseudocode may use the settings of maximum cluster number, max_clustering_num, and the loss threshold, loss_threshold, to determine the representative RD curves. The function, clustering_func(rd_curves), may receive the RD curves and generate clusters as clustering_results. The representative RD curves, representative_rd_curves, are generated by finding RD curves that have less distance than the loss threshold, where the number of clusters is less than the maximum

number of clusters.

---

**Algorithm 1** Representative RD curves Selection

**Input:** *rd_curves, max_clustering_num, loss_threshold*
**Output:** *representative_rd_curves*

> **for** *clustering_num* ← 1 to *max_clustering_num* **do**
>     *clustering_results* ← *clustering_func(rd_curves))*
>     **if** *clustering_results.loss* ≥ *loss_threshold* **then**
>         **continue**
>     **else**
>         **break**
>     **end if**
> **end for**
> *representative_rd_curves* ← *clustering_results.representative_rd_curves*

---

Table I

After determining the representative RD curves, the local optimization process is performed.

Local Optimization Process

FIG. 18 depicts a simplified flowchart 1800 of a local optimization process to select an optimal range according to some embodiments. The local optimization process may generate local optimal encoding operational points for each representative RD curve. The process may determine an optimal range in which encoding operational points may be included, and then determine the optimal local optimal encoding operational points within the optimal range. The following process may be performed for each representative RD curve.

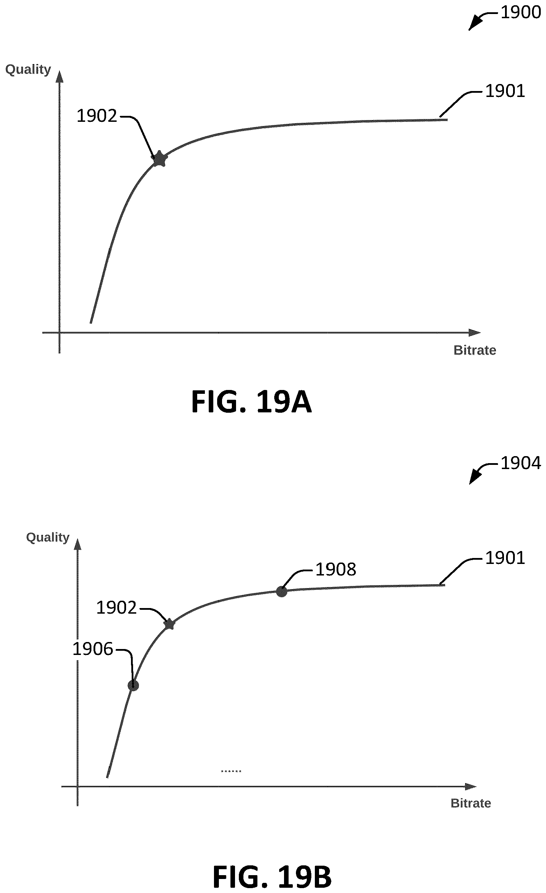

At 1802, encoding points optimization system 1204 selects a point, such as a knee point, of the RD curve. The knee point may be a point that will be included in the optimal range that may be based on the change of characteristics of the RD curve, such as the quality or the bitrate, or both. In some embodiments, when both the quality and the bitrate are both changing at faster rates, more information may be provided by the RD curve compared to when one or both of quality and bitrate are not changing very much. For example, as described above in FIG. 10 and FIG. 11, different characteristics of the RD curve may provide more information. If the bitrate is changing fast, but the quality is stable, having multiple operational encoding points in this range will not provide much information as the quality does not change very much. On the other hand, if the quality changes fast, but the bitrate is similar, operational encoding points in this range may not provide much information because the bitrate is similar. At the knee point, a range around the knee point may provide more information because the quality and the bitrate are both changing at a faster rate and having more operational encoding points around the knee point is better. In some embodiments, the knee point may be a point in which the maximum curvature of the RD curve is calculated. The knee point may be calculated using different methods. In some embodiments, encoding points optimization system 1204 may calculate the slopes of multiple sample points of the RD curve and select the point that includes the fastest slope change as the knee point. Other algorithms may also be used to select a knee point, such as calculating a rate of change of a characteristic and selecting a point based on the rate of change. An example of the knee point will be described in FIG. 19A.

At 1804, encoding points optimization system 1204 selects a ceiling point for the optimal range. The ceiling point may be the topmost point in which an operational encoding point may be inserted. Conceptually, after the ceiling point, one of the bitrate or quality may be similar. For example, as bitrate increases after the ceiling point, the quality may remain similar. In some embodiments, encoding points optimization system 1204 may use a slope of sample points to calculate an area starting point in which the bitrate changes, but the quality remains similar within a threshold. Encoding points optimization system 1204 may determine a flat area starting point as ceiling point, which means the curve will be flat after this point. In other words, the quality values will be similar after this point as bitrate increases, such as in FIG. 10 at 1008. However, if the curve shape is different, the ceiling point may be determined differently, such as at 1110 in FIG 11, the ceiling point may be at around the highest bitrate because the RD curve is changing at the fastest rate as bitrate increases. Encoding points optimization system 1204 may use slope of each point to calculate the flat area starting point, bitrate$_{flat\_area\_starting\_point}$, and make sure this point is greater than knee point, bitrate$_{knee\_point}$. The following may be used to calculate the ceiling point, bitrate$_{ceiling\_point}$:

$$bitrate_{ceiling\_point} = \max\left(bitrate_{flat\_area\_starting\_point}, bitrate_{knee\_point}\right)$$

The bitrate ceiling point may be the maximum of the bitrate of the knee point or the bitrate of the flat area starting point. Some other limitations may be used. For example, a bitrate threshold may be used where the bitrate may not go over this threshold for different requirements, such as content delivery network bandwidth costs, device playback considerations, etc. Also, a quality threshold may be used where quality cannot go over this threshold because qualities will be similar after this point due to limitations, such as a human eye perception of quality.

At 1806, encoding points optimization system 1204 selects a floor point for the optimal range. The floor point for the optimal range may be the lowest point in which the optimal encoding points may be included. In some embodiments, the floor point may be selected where the bitrate does not change very much compared to the quality. However, other curve shapes may dictate other floor points may be needed. Different methods may be used to determine the floor point. In some embodiments, the following may calculate the floor point, but other methods may be used:

$$bitrate_{floor\_point}$$
$$= \text{quality2bitrate}(quality_{knee\_point} - k \cdot (quality_{ceiling\_point}$$
$$- quality_{knee\_point})) \ (k > 0)$$

The floor point, bitrate$_{floor\_point}$, may be based on the quality of the knee point, quality$_{knee\_point}$, minus the difference of the quality of the ceiling point and the quality of the knee point · (quality$_{ceiling_{point}}$ - quality$_{knee_{point}}$) times a constant k. Other methods may also be used. Further, limitations may be used to select a floor point, such as a bitrate threshold, which indicates the bitrate cannot be lower than this threshold. Also, a quality threshold may be used where the quality cannot be lower than this threshold because a lower quality may not be acceptable. A quality gap threshold may be used where the quality gap between the ceiling point and the floor point should not be bigger than this threshold. FIG. 19B shows an example of a floor point, a knee point, and a ceiling point for an RD curve, which will be described below.

At 1808, encoding point optimization system 1204 selects local optimal encoding operational points in the optimal range. In some embodiments, the process may determine a solution under constraint conditions that consider the quality, the bitrate, or both the quality and the bitrate. The optimization target may distribute the quality of the local optimal encoding operational points as close to a rule using the constraint conditions as possible. Scores may be used to indicate how close the local optimal encoding operational points are to the rule. The higher the score, the better the optimized result. The following may be examples of rules, but other rules may be used:

- Equal division: interval_(i+1) / interval_i = 1.

- Progressive division: interval_(i+1) = interval_i + delta.

- Geometric division: interval_(i+1) / interval_i = 1.5, 1.618.

where interval_i is an interval value of i, interval_(i+1) is interval value +1, and delta is a predefined value.

The total number of intervals may be set to a number, such as 10. The interval of interval_i may be set based on the above methods by dividing the range into the total number. Encoding point optimization system 1204 then selects the bitrates based on the interval value to divide the range of bitrates between the minimum bitrate and the maximum bitrate into a list of bitrates. For example, a minimum bitrate of 2000 kbps and a maximum bitrate of 10,000 kbps with an interval of 1500 kbps and a total number of bitrates of five may result in a list of bitrates of 10,000, 7500, 5000, 3500, and 2000 kbps when using equal division.

The above rules may generate local optimal encoding operational points via equal intervals, progressively, via geometric intervals, or using other rules. The following may be examples of constraint conditions, but other constraint conditions may be used:

- Keep the bitrate interval between two adjacent points bigger than a minimum bitrate gap min_bitrate_gap.

- Keep the bitrate interval between two adjacent points less than a maximum bitrate gap max_bitrate_gap.

In the local optimization process to select local optimal encoding operational points, the following process may be used in some embodiments. First, candidate internal points are generated in the optimal range. The process may use thresholds, such as a minimum quality gap threshold that is the difference of two adjacent candidate points should be equal to the minimum quality gap. Then, encoding points optimization system 1204 generates a list of candidate internal points on the RD curve based on the gap. In some embodiments, encoding points optimization system 1204 generates different combinations of candidate internal points in lists of candidate internal points. The process defines a number of candidate internal points in one list and enumerates all possible combinations of the candidate internal points in lists. For example, if encoding points optimization system 1204 generates five candidate internal points, (A, B, C, D, E), and the number of points in one candidate internal points list is three, the candidate internal points lists may be: {(A,B,C), (A,B,D), (A,B,E), (A,C,D), (A,C,E), (A,D,E), (B,C,D), (B,C,E), (B,D,E), (C,D,E)}. In some embodiments, the ceiling point and the floor point may always be in all the candidate list, but are not in the example above.

Then, encoding points optimization system 1204 selects the optimal local encoding operational points from all possible combinations of candidate internal points lists. The selection of local optimal encoding operational points may be an optimal solution problem under constraint conditions. In this example, encoding points optimization system 1204 uses the equal division rule as the optimization target and the constraint conditions are a bitrate interval between two adjacent points must be bigger than the minimum bitrate gap, min_bitrate_gap, and less than the maximum bitrate gap, max_bitrate_gap. The following is a method to evaluate the equalization score of a list of numbers:

Step 1: sort all the values of this list from smallest to largest, i = 0, 1, 2, 3, ..., n.

$$anchor\_step = \frac{value_n - value_0}{n}$$

Step 2: calculate the anchor step.

Step 3: get each anchor position, $anchor_i = value_0 + i * anchor\_step$

$$diff = \frac{1}{n-1} * \sum_{\{i=1\}}^{\{n-1\}} |value_i - anchor_i|$$

Step 4: calculate the average offset of all points.

$$equalization\_score = \frac{diff}{anchor\_step}$$

Step 5: output the score.

Table II includes pseudocode of the above generation of equalization scores. All candidate point results are saved in the array bitrate[N][M]. The variable N is the number of candidate points list and combination ID, combination_ID, to an index, the variable M is the number of points in one candidate points list. The variable, variant_ID, is used to index. The pseudocode finds the optimized combination ID of the candidate internal points list.

---

**Algorithm**

---

**Input:** $bitrate[N][M]$
**Output:** $optimizaed\_combination\_id$

$optimized\_combination\_id \leftarrow -1$
$optimized\_equalization\_score \leftarrow +\infty$
**for** $combination\_id \leftarrow 0$ **to** $N$ **do**
    $flag \leftarrow true$
    $bitrate\_comb[] \leftarrow bitrate[combination\_id]$
    **for** $variant\_id \leftarrow 0$ **to** $M - 1$ **do**
        $bitrate\_gap \leftarrow bitrate\_comb[variant\_id] - bitrate\_comb[variant\_id - 1]$
        **if** $bitrate\_gap > min\_bitrate\_gap$ **and** $bitrate\_gap < max\_bitrate\_gap$
**then**
            continue
        **else**
            $flag \leftarrow false$
        **end if**
    **end for**
    **if** $flag == true$ **then**
        $equalization\_score \leftarrow calculate\_equalization\_score(bitrate\_comb[])$
        **if** $equalization\_score < optimized\_equalization\_score$ **then**
            $optimized\_equalization\_score \leftarrow equalization\_score$
            $optimized\_combination\_id \leftarrow combination\_id$
        **end if**
    **end if**
**end for**

---

Table II

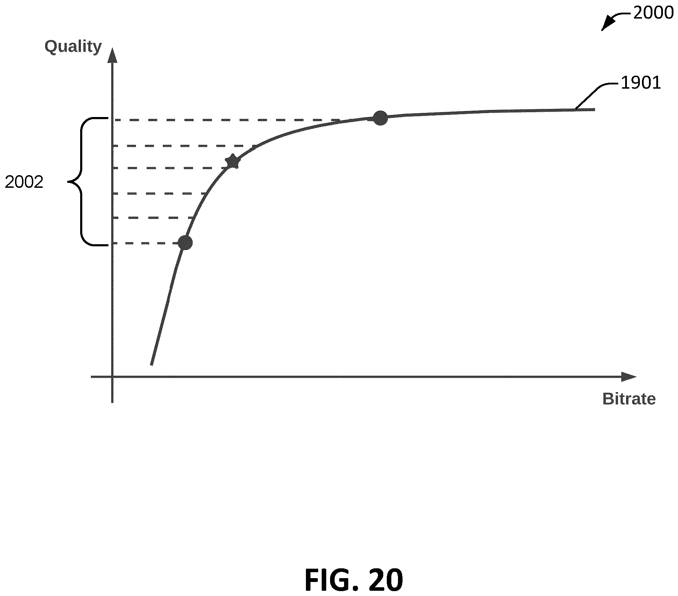

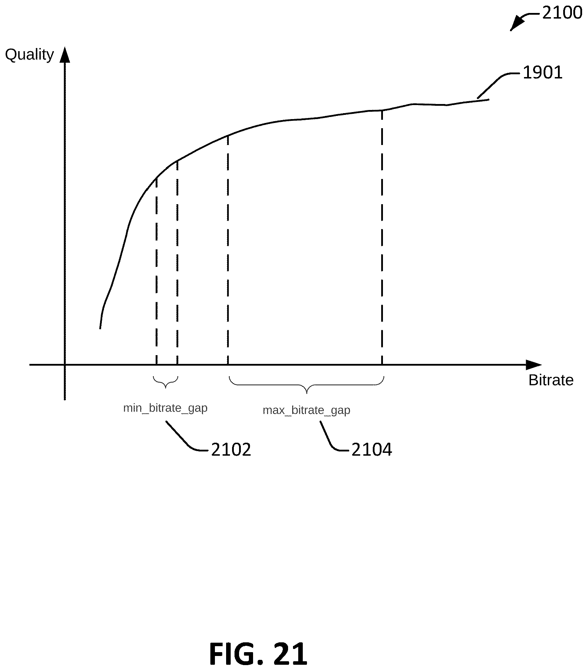

FIGs. 20 and 21 describe the local optimal encoding operational points selection in more detail.

As discussed above in 1802, the knee point is determined. FIG. 19A depicts a graph 1900 showing a knee point 1902 on an RD curve 1901 according to some embodiments. The Y-axis of graph 1900 shows quality and the X-axis shows bitrate. Knee point 1902 may be selected as described above. As can be seen, both quality and bitrate may be changing more rapidly compared to other points on the RD curve 1901.

FIG. 19B shows an example 1904 of a floor point 1906, a knee point 1902, and a ceiling point 1908 according to some embodiments. As shown, ceiling point 1908 is at a higher bitrate than knee point 1902. Points after ceiling point 1908 on RD curve 1901 may include higher bitrates, but the quality remains similar. For floor point 1906, points before floor point 1906 on RD curve 1901 may include quality values that are changing, but the bitrate remains similar. However, both the bitrate and the quality for points around knee point 1902 may be changing faster compared to floor point 1906 and ceiling point 1908, and knee point 1902 is in between floor point 1906 and ceiling point 1908.

As discussed above in 1808, local optimal encoding operational points are determined. FIG. 20 depicts a graph 2000 that shows an example of selecting local optimal encoding operational points according to some embodiments. The points that are selected may be based on an equal division process. Here, the quality within the optimal range is divided equally and six points that correspond to the dotted lines at 2002 of RD curve 1901 may be the local optimal encoding operational points. The bitrate values for the local optimal encoding operational points may be used to encode the segments of the video for the chunk. Other methods may select other local optimal encoding operational points.

FIG. 21 depicts a graph 2100 depicting selecting local optimal encoding operational points based on constraint conditions according to some embodiments. A constraint condition of a minimum bitrate gap, min _bitrate_gap, at 2102 and a maximum bitrate, gap max_bitrate_gap, at 2104 are shown on RD curve 1901. The minimum bitrate gap forces the local optimal encoding operational points to have a distance greater than the minimum bitrate gap. Also, the maximum bitrate gap forces local optimal encoding operational points to not be farther away than the maximum bitrate gap.

FIG. 22 depicts different examples of local optimal encoding operational points of the representative RD curves according to some embodiments. Graphs 2200, 2204, 2208 show different examples of local optimal encoding operational points 2202-1, 2202-2, 2202-3 from three representative RD curves 1901-1, 1901-2, 1901-3, respectively. As can be seen, the local optimal encoding operational points may be found in different optimal ranges at different quality and bitrate values. The values may be located on respective RD curves 1901 at points in which optimal information may be provided for the RD curve as discussed above.

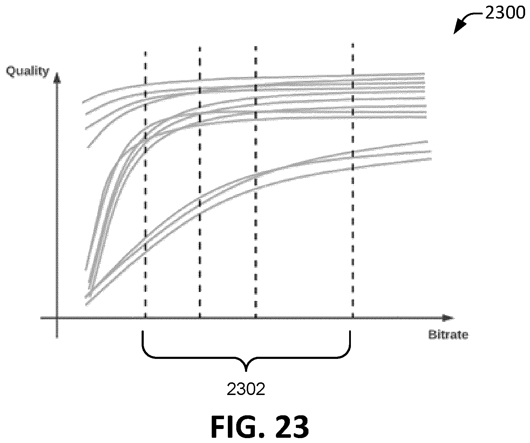

Once the local optimal encoding operational points are determined, encoding point optimization system 1204 determines global optimal encoding operational points. FIG. 23 depicts a graph 2300 showing the global optimal encoding operational points according to some embodiments. The RD curves for all segments of the chunk are shown. The combination of the local optimal encoding operational points from the representative RD curves results in the four global optimal encoding operational points at 2302. For example, dotted lines at 2302 show four global optimal encoding operational points for the chunk at the corresponding bitrates. These global optimal encoding operational points may follow the constraint conditions that are set and also optimally represent the segment. For example, encoding point optimization system 1204 may optimally combine the local optimal encoding operational points to form the global optimal encoding operational points. In some embodiments, encoding point optimization system 1204 may use a weighted combination based on characteristics of clusters 1700. A weighted value may be based on the number of RD curves in a cluster. For example, cluster 1702-2 may include the largest number of RD curves and the local optimal encoding operational points from this cluster may be weighted the highest. Cluster 1702-3 may include the least number of RD curves and the local optimal encoding operational points from this cluster are weighted the lowest. Also, the weighted combination could also consider other information, such as the importance of a segment (e.g., segments that include important content). Further, user preference or preferred settings may be used, such as the local optimal encoding operational points from segments at the beginning and the end of the video may be used. The following shows an example of a weighted average that uses cluster size:

$$global\_optimal\_points_i = \frac{1}{cluster\_number}\sum_{n=1}^{cluster\_number}(\omega_n \times local\_optimal\_points_i).$$

The cluster number, cluster_number, may be the cluster identifier. The value of $\omega_n$ may be based on the number of RD curves in the cluster. Other methods may also be used, such as a winner takes all method. In this example, one of the clusters wins and the local optimal encoding operational points from this cluster is used as the global optimal encoding operational points. In this example, the winning cluster may have a large amount of RD curves compared to the other clusters, and the local optimal encoding operational points for this cluster may best represent the segment. A combination of the two options may also be used. If the weighted value of one cluster is big enough, encoding point optimization system 1204 may use the winner takes all method; otherwise, encoding point optimization system 1204 may use weighted average method.

Once the global optimal encoding operational points are determined, encoding system 108 may use the global optimal encoding operational points. For example, encoder 1206 may use the global optimal encoding operational points to encode the segments of the chunk. The encoded segments of the chunk may be used to generate profiles in a profile ladder or used in the SQA process to select segments for the profiles as discussed in FIG. 12.

Conclusion

Accordingly, the above process uses a local optimization process and a global optimization process to generate optimized encoding operational points. The optimized encoding operational points may consider segment level RD curves within a chunk. This improves the selection process of the encoding operational points. Further, the encoding process may be improved where encoded segments may provide segments that better represent the segments of a chunk. The playback process may be improved as a result as higher quality segments that use less bitrate may be provided for playback to a client and a more diverse set of segments for profiles is used. The process may also use less computational resources using clusters and representative RD curves.

System

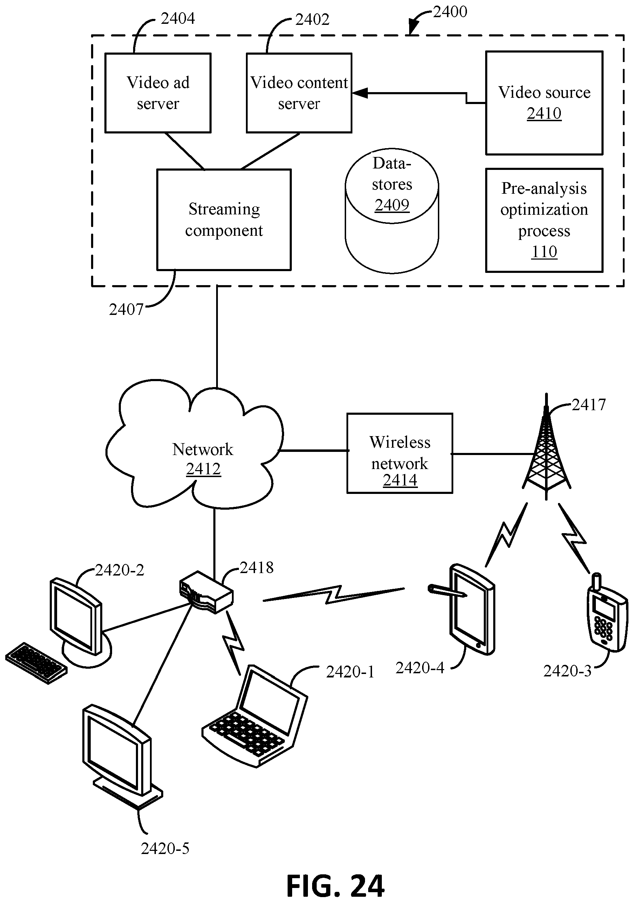

Features and aspects as disclosed herein may be implemented in conjunction with a video streaming system 2400 in communication with multiple client devices via one or more communication networks as shown in FIG. 24. Aspects of the video streaming system 2400 are described merely to provide an example of an application for enabling distribution and delivery of content prepared according to the present disclosure. It should be appreciated that the present technology is not limited to streaming video applications and may be adapted for other applications and delivery mechanisms.

In one embodiment, a media program provider may include a library of media programs. For example, the media programs may be aggregated and provided through a site (e.g., website), application, or browser. A user can access the media program provider's site or application and request media programs. The user may be limited to requesting only media programs offered by the media program provider.

In system 2400, video data may be obtained from one or more sources for example, from a video source 2410, for use as input to a video content server 2402. The input video data may comprise raw or edited frame-based video data in any suitable digital format, for example, Moving Pictures Experts Group (MPEG)-1, MPEG-2, MPEG-4, VC-1, H.264 / Advanced Video Coding (AVC), High Efficiency Video Coding (HEVC), or other format. In an alternative, a video may be provided in a non-digital format and converted to digital format using a scanner or transcoder. The input video data may comprise video clips or programs of various types, for example, television episodes, motion pictures, and other content produced as primary content of interest to consumers. The video data may also include audio or only audio may be used.

The video streaming system 2400 may include one or more computer servers or modules 2402, 2404, and 2407 distributed over one or more computers. Each server 2402, 2404, 2407 may include, or may be operatively coupled to, one or more data stores 2409, for example databases, indexes, files, or other data structures. A video content server 2402 may access a data store (not shown) of various video segments. The video content server 2402 may serve the video segments as directed by a user interface controller communicating with a client device. As used herein, a video segment refers to a definite portion of frame-based video data, such as may be used in a streaming video session to view a television episode, motion picture, recorded live performance, or other video content.

In some embodiments, a video advertising server 2404 may access a data store of relatively short videos (e.g., 10 second, 30 second, or 60 second video advertisements) configured as advertising for a particular advertiser or message. The advertising may be provided for an advertiser in exchange for payment of some kind or may comprise a promotional message for the system 2400, a public service message, or some other information. The video advertising server 2404 may serve the video advertising segments as directed by a user interface controller (not shown).

The video streaming system 2400 also may include pre-analysis optimization process 110.

The video streaming system 2400 may further include an integration and streaming component 2407 that integrates video content and video advertising into a streaming video segment. For example, streaming component 2407 may be a content server or streaming media server. A controller (not shown) may determine the selection or configuration of advertising in the streaming video based on any suitable algorithm or process. The video streaming system 2400 may include other modules or units not depicted in FIG. 24, for example, administrative servers, commerce servers, network infrastructure, advertising selection engines, and so forth.

The video streaming system 2400 may connect to a data communication network 2412. A data communication network 2412 may comprise a local area network (LAN), a wide area network (WAN), for example, the Internet, a telephone network, a wireless network 2414 (e.g., a wireless cellular telecommunications network (WCS)), or some combination of these or similar networks.

One or more client devices 2420 may be in communication with the video streaming system 2400, via the data communication network 2412, wireless network 2414, or another network. Such client devices may include, for example, one or more laptop computers 2420-1, desktop computers 2420-2, "smart" mobile phones 2420-3, tablet devices 2420-4, network-enabled televisions 2420-5, or combinations thereof, via a router 2418 for a LAN, via a base station 2417 for wireless network 2414, or via some other connection. In operation, such client devices 2420 may send and receive data or instructions to the system 2400, in response to user input received from user input devices or other input. In response, the system 2400 may serve video segments and metadata from the data store 2409 responsive to selection of media programs to the client devices 2420. Client devices 2420 may output the video content from the streaming video segment in a media player using a display screen, projector, or other video output device, and receive user input for interacting with the video content.

Distribution of audio-video data may be implemented from streaming component 2407 to remote client devices over computer networks, telecommunications networks, and combinations of such networks, using various methods, for example streaming. In streaming, a content server streams audio-video data continuously to a media player component operating at least partly on the client device, which may play the audio-video data concurrently with receiving the streaming data from the server. Although streaming is discussed, other methods of delivery may be used. The media player component may initiate play of the video data immediately after receiving an initial portion of the data from the content provider. Traditional streaming techniques use a single provider delivering a stream of data to a set of end users. High bandwidth and processing power may be required to deliver a single stream to a large audience, and the required bandwidth of the provider may increase as the number of end users increases.

Streaming media can be delivered on-demand or live. Streaming enables immediate playback at any point within the file. End-users may skip through the media file to start playback or change playback to any point in the media file. Hence, the end-user does not need to wait for the file to progressively download. Typically, streaming media is delivered from a few dedicated servers having high bandwidth capabilities via a specialized device that accepts requests for video files, and with information about the format, bandwidth, and structure of those files, delivers just the amount of data necessary to play the video, at the rate needed to play it. Streaming media servers may also account for the transmission bandwidth and capabilities of the media player on the destination client. Streaming component 2407 may communicate with client device 2420 using control messages and data messages to adjust to changing network conditions as the video is played. These control messages can include commands for enabling control functions such as fast forward, fast reverse, pausing, or seeking to a particular part of the file at the client.

Since streaming component 2407 transmits video data only as needed and at the rate that is needed, precise control over the number of streams served can be maintained. The viewer will not be able to view high data rate videos over a lower data rate transmission medium. However, streaming media servers (1) provide users random access to the video file, (2) allow monitoring of who is viewing what video programs and how long they are watched (3) use transmission bandwidth more efficiently, since only the amount of data required to support the viewing experience is transmitted, and (4) the video file is not stored in the viewer's computer, but discarded by the media player, thus allowing more control over the content.

Streaming component 2407 may use TCP-based protocols, such as HyperText Transfer Protocol (HTTP) and Real Time Messaging Protocol (RTMP). Streaming component 2407 can also deliver live webcasts and can multicast, which allows more than one client to tune into a single stream, thus saving bandwidth. Streaming media players may not rely on buffering the whole video to provide random access to any point in the media program. Instead, this is accomplished using control messages transmitted from the media player to the streaming media server. Other protocols used for streaming are HTTP live streaming (HLS) or Dynamic Adaptive Streaming over HTTP (DASH). The HLS and DASH protocols deliver video over HTTP via a playlist of small segments that are made available in a variety of bitrates typically from one or more content delivery networks (CDNs). This allows a media player to switch both bitrates and content sources on a segment-by-segment basis. The switching helps compensate for network bandwidth variances and infrastructure failures that may occur during playback of the video.

The delivery of video content by streaming may be accomplished under a variety of models. In one model, the user pays for the viewing of video programs, for example, paying a fee for access to the library of media programs or a portion of restricted media programs, or using a pay-per-view service. In another model widely adopted by broadcast television shortly after its inception, sponsors pay for the presentation of the media program in exchange for the right to present advertisements during or adjacent to the presentation of the program. In some models, advertisements are inserted at predetermined times in a video program, which times may be referred to as "ad slots" or "ad breaks." With streaming video, the media player may be configured so that the client device cannot play the video without also playing predetermined advertisements during the designated ad slots.

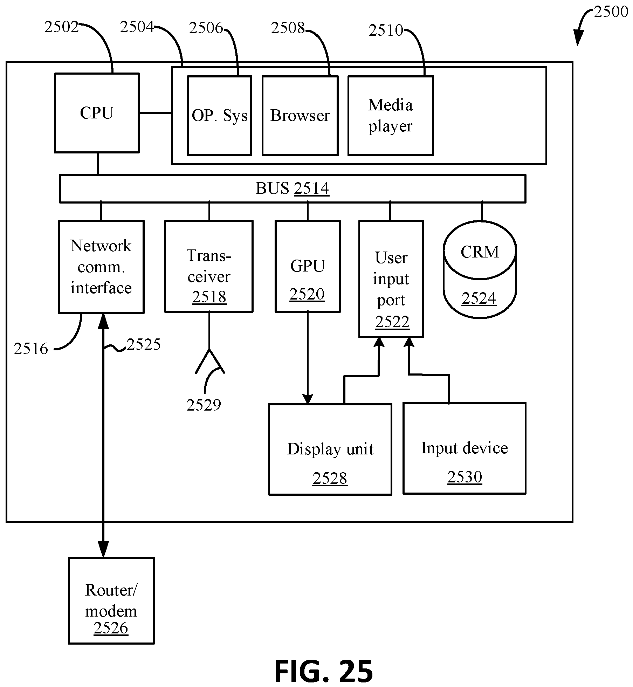

Referring to FIG. 25, a diagrammatic view of an apparatus 2500 for viewing video content and advertisements is illustrated. In selected embodiments, the apparatus 2500 may include a processor (CPU) 2502 operatively coupled to a processor memory 2504, which holds binary-coded functional modules for execution by the processor 2502. Such functional modules may include an operating system 2506 for handling system functions such as input/output and memory access, a browser 2508 to display web pages, and media player 2510 for playing video. The memory 2504 may hold additional modules not shown in FIG. 25, for example modules for performing other operations described elsewhere herein.

A bus 2514 or other communication components may support communication of information within the apparatus 2500. The processor 2502 may be a specialized or dedicated microprocessor configured or operable to perform particular tasks in accordance with the features and aspects disclosed herein by executing machine-readable software code defining the particular tasks. Processor memory 2504 (e.g., random access memory (RAM) or other dynamic storage device) may be connected to the bus 2514 or directly to the processor 2502, and store information and instructions to be executed by a processor 2502. The memory 2504 may also store temporary variables or other intermediate information during execution of such instructions.

A computer-readable medium in a storage device 2524 may be connected to the bus 2514 and store static information and instructions for the processor 2502; for example, the storage device (CRM) 2524 may store the modules for operating system 2506, browser 2508, and media player 2510 when the apparatus 2500 is powered off, from which the modules may be loaded into the processor memory 2504 when the apparatus 2500 is powered up. The storage device 2524 may include a non-transitory computer-readable storage medium holding information, instructions, or some combination thereof, for example instructions that when executed by the processor 2502, cause the apparatus 2500 to be configured or operable to perform one or more operations of a method as described herein.

A network communication (comm.) interface 2516 may also be connected to the bus 2514. The network communication interface 2516 may provide or support two-way data communication between the apparatus 2500 and one or more external devices, e.g., the streaming system 2400, optionally via a router/modem 2526 and a wired or wireless connection 2525. In the alternative, or in addition, the apparatus 2500 may include a transceiver 2518 connected to an antenna 2529, through which the apparatus 2500 may communicate wirelessly with a base station for a wireless communication system or with the router/modem 2526. In the alternative, the apparatus 2500 may communicate with a video streaming system 2400 via a local area network, virtual private network, or other network. In another alternative, the apparatus 2500 may be incorporated as a module or component of the system 2400 and communicate with other components via the bus 2514 or by some other modality.

The apparatus 2500 may be connected (e.g., via the bus 2514 and graphics processing unit 2520) to a display unit 2528. A display 2528 may include any suitable configuration for displaying information to an operator of the apparatus 2500. For example, a display 2528 may include or utilize a liquid crystal display (LCD), touchscreen LCD (e.g., capacitive display), light emitting diode (LED) display, projector, or other display device to present information to a user of the apparatus 2500 in a visual display.

One or more input devices 2530 (e.g., an alphanumeric keyboard, microphone, keypad, remote controller, game controller, camera, or camera array) may be connected to the bus 2514 via a user input port 2522 to communicate information and commands to the apparatus 2500. In selected embodiments, an input device 2530 may provide or support control over the positioning of a cursor. Such a cursor control device, also called a pointing device, may be configured as a mouse, a trackball, a track pad, touch screen, cursor direction keys or other device for receiving or tracking physical movement and translating the movement into electrical signals indicating cursor movement. The cursor control device may be incorporated into the display unit 2528, for example using a touch sensitive screen. A cursor control device may communicate direction information and command selections to the processor 2502 and control cursor movement on the display 2528. A cursor control device may have two or more degrees of freedom, for example allowing the device to specify cursor positions in a plane or three-dimensional space.

Some embodiments may be implemented in a non-transitory computer-readable storage medium for use by or in connection with the instruction execution system, apparatus, system, or machine. The computer-readable storage medium contains instructions for controlling a computer system to perform a method described by some embodiments. The computer system may include one or more computing devices. The instructions, when executed by one or more computer processors, may be configured or operable to perform that which is described in some embodiments.

As used in the description herein and throughout the claims that follow, "a", "an", and "the" includes plural references unless the context clearly dictates otherwise. Also, as used in the description herein and throughout the claims that follow, the meaning of "in" includes "in" and "on" unless the context clearly dictates otherwise.

The above description illustrates various embodiments along with examples of how aspects of some embodiments may be implemented. The above examples and embodiments should not be deemed to be the only embodiments and are presented to illustrate the flexibility and advantages of some embodiments as defined by the following claims. Based on the above disclosure and the following claims, other arrangements, embodiments, implementations, and equivalents may be employed without departing from the scope hereof as defined by the claims.

**Claims**

1. A method comprising:

   receiving a plurality of representations of a relationship between bitrate and quality for a first portion of content, wherein representations in the plurality of representations are based on respective second portions of the content that is included in the first portion of content;
   generating clusters of the plurality of representations;
   analyzing the clusters to determine a first list of encoding operational points for respective clusters;
   analyzing the first list of encoding operational points for respective cluster to determine a second list of encoding operational points; and
   outputting the second list of encoding operational points for use in encoding the first portion of content.

2. The method of claim 1, wherein:

   the first portion of content comprises a chunk, and
   a second portion of the content comprises a segment, wherein the chunk includes a plurality of segments, wherein, optionally:

      the segment comprises an independent analysis unit in which the segment can be decoded independently, and
      the chunk comprises an independent encoding unit in which the second list of encoding operational points for an encoder are not changed to encode the chunk.

3. The method of claim 1 or 2, wherein generating clusters of the plurality of representations comprises:
   analyzing the representations based on a clustering process to form the clusters, wherein each cluster includes one or more of the representations.

4. The method of any one of claims 1 to 3, further comprising:

   determining a representative relationship for respective clusters; and
   analyzing the representative relationships for respective clusters to determine the first list of encoding operational points.

5. The method of claim 4, wherein:

a respective representative relationship represents the representations in a respective cluster, and
the respective representative relationship is analyzed instead of the representations in the cluster to determine the first list of encoding operational points.

6. The method of claim 4, wherein the respective representative relationship is a representation in the cluster or a new representation that is generated from the representations in the cluster.

7. The method of any one of claims 1 to 6, wherein analyzing the clusters to determine the first list of encoding operational points for respective clusters comprises:
determining a range that should include the encoding operational points in the first list of encoding operational points.

8. The method of claim 7, wherein determining the range comprises:

determining a first point;
determining a second point; and
determining encoding operational points in the first list of encoding operational points based on the first point and the second point.

9. The method of claim 8, wherein determining the range comprises:

determining a third point, wherein the third point is based on a rate of change of the representation, and wherein the first point and the second point include the third point; and/or
wherein a condition relating to bitrate or quality is applied to determine the first point or the second point.

10. The method of claim 7, 8 or 9, wherein determining encoding operational points comprises:

selecting encoding operational points based on an interval between encoding operational points from within the range,
wherein, optionally, selecting encoding operational points comprises:

determining a constraint condition; and
selecting encoding operational points that meet the constraint condition, and wherein, optionally, the constraint condition is based on quality or bitrate.

11. The method of any one of claims 1 to 10, wherein analyzing the first list of encoding operational points for respective representative relationships to determine the second list of encoding operational points comprises:

determining a weight for respective clusters;
applying the weight for respective clusters to the first list of encoding operational points for respective clusters to generate a first list of weighted encoding operational points; and
combining the first list of weighted encoding operational points for the clusters to determine the second list of encoding operational points.

12. The method of claim 11, wherein:
the weight for respective clusters is based on a number of representations found in respective clusters.

13. The method of any one of claims 1 to 12, wherein analyzing the first list of encoding operational points for respective representative relationships to determine the second list of encoding operational points comprises:

determining a weight for respective clusters; and
selecting one of the first list of encoding operational points based on the weight for a cluster.

14. A non-transitory computer-readable storage medium having stored thereon computer executable instructions, which when executed by a computing device, cause the computing device to be operable for:

receiving a plurality of representations of a relationship between bitrate and quality for a first portion of content, wherein representations in the plurality of representations are based on respective second portions of the content that is included in the first portion of content;

generating clusters of the plurality of representations;

analyzing the clusters to determine a first list of encoding operational points for respective clusters;

analyzing the first list of encoding operational points for respective cluster to determine a second list of encoding operational points; and

outputting the second list of encoding operational points for use in encoding the first portion of content.

**15.** An apparatus comprising:

one or more computer processors; and

a computer-readable storage medium comprising instructions for controlling the one or more computer processors to be operable for:

receiving a plurality of representations of a relationship between bitrate and quality for a first portion of content, wherein representations in the plurality of representations are based on respective second portions of the content that is included in the first portion of content;

generating clusters of the plurality of representations;

analyzing the clusters to determine a first list of encoding operational points for respective clusters;

analyzing the first list of encoding operational points for respective cluster to determine a second list of encoding operational points; and

outputting the second list of encoding operational points for use in encoding the first portion of content.

**FIG. 1**

**FIG. 2**

**FIG. 3A**

Chunk_0

| segment_0 | segment_1 | segment_2 | ○ ○ ○ | segment_n |

204

List of CABs for chunk_0 —304

encode

| ENC_S0_CAB_0 | ENC_S1_CAB_0 | ENC_S2_CAB_0 | ENC_Sn_CAB_0 |
| ENC_S0_CAB_1 | ENC_S1_CAB_1 | ENC_S2_CAB_1 | ENC_Sn_CAB_1 |
| ENC_S0_CAB_2 | ENC_S1_CAB_2 | ENC_S2_CAB_2 | ENC_Sn_CAB_2 |
| ○ ○ ○ | ○ ○ ○ | ○ ○ ○ | ○ ○ ○ |
| ENC_S0_CAB_m | ENC_S1_CAB_m | ENC_S2_CAB_m | ENC_Sn_CAB_m |

306

**FIG. 3B**

EP 4 601 298 A1

**FIG. 4**

EP 4 601 298 A1

EP 4 601 298 A1

FIG. 5

**FIG. 6**

EP 4 601 298 A1

| segment_0 | segment_1 | segment_2 | • • • | segment_n |

SQA

Profile_0    [ENC_S0_CAB_1]    [ENC_S1_CAB_0]    [ENC_S2_CAB_0]    [ENC_Sn_CAB_1]    — 702

Profile_1    [ENC_S0_CAB_4]    [ENC_S1_CAB_2]    [ENC_S2_CAB_3]    [ENC_Sn_CAB_2]    — 704

Profile_2    [ENC_S0_CAB_5]    [ENC_S1_CAB_4]    [ENC_S2_CAB_4]    [ENC_Sn_CAB_6]    — 706

Profile_p    [ENC_S0_CAB_(m-1)]    [ENC_S1_CAB_m]    [ENC_S2_CAB_m]    [ENC_Sn_CAB_m]    — 708

# FIG. 7

| chunk_A | chunk_B | chunk_C |
|---|---|---|

Example RD curve of chunk_A

Example RD curve of chunk_B

Example RD curve of chunk_C

**FIG. 8**

FIG. 9

**FIG. 10**

EP 4 601 298 A1

FIG. 11

**FIG. 12**

EP 4 601 298 A1

**FIG. 13**

RD prediction system 1202

Trained models

Feature extraction system 1302

Prediction network 1304

Chunk

Segment position
Encoding configuration
Target bitrate

Rate distortion curves

| segment_0 | segment_1 | segment_2 | o o o | segment_n | } 204 |

Encoding Prediction

| RD curve of segment_0 | RD curve of segment_1 | RD curve of segment_2 | o o o | RD curve of segment_n | } 1402 |

**FIG. 14**

1500

Selection Method

Select representative RD curves — 1502

Perform local encoding operational points selection process at segment level — 1504

Perform global chunk level optimization process to select optimized encoding operational points — 1506

# FIG. 15

1600

```
  ╭────────────────────────────────╮
  │  Representative Curve Selection │
  │            Method              │
  ╰────────────────────────────────╯
                 │
                 ▼
  ┌────────────────────────────────┐  ┌─1602
  │ Receive graph information for RD curves │
  └────────────────────────────────┘
                 │
                 ▼
  ┌────────────────────────────────┐  ┌─1604
  │ Cluster the RD curves into clusters using │
  │        the graph information          │
  └────────────────────────────────┘
                 │
                 ▼
  ┌────────────────────────────────┐  ┌─1606
  │  Select a representative RD curve for  │
  │         respective clusters          │
  └────────────────────────────────┘
```

# FIG. 16

FIG. 17A

FIG. 17B

1800

```
        ┌─────────────────────────────┐
        │  Local Optimization Method  │
        └─────────────────────────────┘
                      │
                      ▼
        ┌─────────────────────────────┐  1802
        │  Select knee point of RD curve │
        └─────────────────────────────┘
                      │
                      ▼
        ┌─────────────────────────────────┐  1804
        │ Select ceiling point for the optimal range │
        └─────────────────────────────────┘
                      │
                      ▼
        ┌─────────────────────────────────┐  1806
        │  Select floor point for the optimal range │
        └─────────────────────────────────┘
                      │
                      ▼
        ┌─────────────────────────────────┐  1808
        │ Select local optimal encoding operational │
        │        points in the optimal range        │
        └─────────────────────────────────┘
```

# FIG. 18

**FIG. 19A**

**FIG. 19B**

**FIG. 20**

**FIG. 21**

FIG. 22

FIG. 23

**FIG. 24**

FIG. 25

## EUROPEAN SEARCH REPORT

**Application Number**

EP 24 21 7423

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,P | EP 4 429 236 A1 (BEIJING HULU SOFTWARE TECH DEVELOPMENT CO LTD [CN]) 11 September 2024 (2024-09-11) * the whole document * | 1-15 | INV. H04N21/234 H04N19/136 H04N19/147 H04N19/196 |
| A,P | EP 4 429 235 A1 (BEIJING HULU SOFTWARE TECH DEVELOPMENT CO LTD [CN] ET AL.) 11 September 2024 (2024-09-11) * the whole document * | 1-15 | H04N21/2343 H04N21/845 |
| A | US 2023/188764 A1 (PAHALAWATTA PESHALA [US] ET AL) 15 June 2023 (2023-06-15) * abstract * | 1-15 | |
| A | US 11 277 620 B1 (LIU CHEN [CN] ET AL) 15 March 2022 (2022-03-15) * abstract * | 1-15 | |
| A | US 2021/360260 A1 (REHMAN ABDUL [CA] ET AL) 18 November 2021 (2021-11-18) * abstract * | 1-15 | |

**TECHNICAL FIELDS SEARCHED (IPC)**

H04N

The present search report has been drawn up for all claims

| Place of search | Date of completion of the search | Examiner |
|---|---|---|
| The Hague | 20 February 2025 | Santos Conde, José |

EPO FORM 1503 03.82 (P04C01)

## ANNEX TO THE EUROPEAN SEARCH REPORT
## ON EUROPEAN PATENT APPLICATION NO.

EP 24 21 7423

This annex lists the patent family members relating to the patent documents cited in the above-mentioned European search report.
The members are as contained in the European Patent Office EDP file on
The European Patent Office is in no way liable for these particulars which are merely given for the purpose of information.

20-02-2025

| Patent document cited in search report | | Publication date | Patent family member(s) | | Publication date |
|---|---|---|---|---|---|
| EP 4429236 | A1 | 11-09-2024 | EP | 4429236 A1 | 11-09-2024 |
| | | | JP | 2024125995 A | 19-09-2024 |
| | | | KR | 20240136213 A | 13-09-2024 |
| | | | US | 2024305788 A1 | 12-09-2024 |
| EP 4429235 | A1 | 11-09-2024 | CN | 118632002 A | 10-09-2024 |
| | | | EP | 4429235 A1 | 11-09-2024 |
| | | | JP | 2024125994 A | 19-09-2024 |
| | | | KR | 20240136212 A | 13-09-2024 |
| | | | US | 2024305842 A1 | 12-09-2024 |
| US 2023188764 | A1 | 15-06-2023 | NONE | | |
| US 11277620 | B1 | 15-03-2022 | CN | 114448967 A | 06-05-2022 |
| | | | EP | 3993419 A1 | 04-05-2022 |
| | | | JP | 7314234 B2 | 25-07-2023 |
| | | | JP | 2022074118 A | 17-05-2022 |
| | | | KR | 20220058454 A | 09-05-2022 |
| | | | US | 11277620 B1 | 15-03-2022 |
| | | | US | 2022159268 A1 | 19-05-2022 |
| US 2021360260 | A1 | 18-11-2021 | CA | 3178565 A1 | 18-11-2021 |
| | | | EP | 4150910 A1 | 22-03-2023 |
| | | | IL | 298174 A | 01-01-2023 |
| | | | US | 2021360260 A1 | 18-11-2021 |
| | | | US | 2023319290 A1 | 05-10-2023 |
| | | | WO | 2021229520 A1 | 18-11-2021 |

EPO FORM P0459

For more details about this annex : see Official Journal of the European Patent Office, No. 12/82

**REFERENCES CITED IN THE DESCRIPTION**

**Patent documents cited in the description**

- US 17928123
- US 29518423